# EUROPEAN PATENT APPLICATION

(11) **EP 4 422 299 A1**
(43) Date of publication of application: **28.08.2024**
(21) Application number: 22891778.7
(22) Date of filing: 24.10.2022
(51) Int. Cl.: H04W 64/00, H04W 52/04

(54) **METHOD FOR REPORTING INFORMATION, AND COMMUNICATION APPARATUS**

(30) Priority: 11.11.2021 CN 202111334918
(71) Applicant: Huawei Technologies Co., Ltd., Shenzhen, Guangdong 518129 (CN)
(72) Inventor: LIU, Mengting, Shenzhen, Guangdong 518129 (CN); LIU, Jianghua, Shenzhen, Guangdong 518129 (CN); GAO, Xin, Shenzhen, Guangdong 518129 (CN); YU, Zheng, Shenzhen, Guangdong 518129 (CN); LIU, Daoming, Shenzhen, Guangdong 518129 (CN)
(74) Representative: Grünecker Patent- und Rechtsanwälte PartG mbB
(86) International application number: PCT/CN2022/127023
(87) International publication number: WO 2023/082981

(57) **Abstract**

This application provides an information reporting method. In the method, P reference signals correspond to Q pieces of information, and the Q pieces of information are information about a power consumption parameter, a motion parameter, a notification parameter, and a requirement parameter of a terminal device. The terminal device can report information that is about a parameter and that corresponds to one or more reference signals by sending the one or more of the P reference signals. Therefore, the terminal device can further support reporting of information about a communication requirement when a low power positioning requirement is met. In addition, compared with reporting, by the terminal device, information depending on a PUSCH, implicitly reporting, by the terminal device, information by using a reference signal can effectively reduce complexity and signaling overheads of the terminal device, thereby reducing power consumption of the terminal device.

## Description

This application claims priority to Chinese Patent Application No. 202111334918.6, filed with the China National Intellectual Property Administration on November 11, 2021 and entitled "INFORMATION REPORTING METHOD AND COMMUNICATION APPARATUS", which is incorporated herein by reference in its entirety.

### TECHNICAL FIELD

This application relates to the field of wireless communication technologies, and more specifically, to an information reporting method and a communication apparatus.

### BACKGROUND

Positioning is important content in a wireless communication technology. With the increasing demand of the mass consumer market for positioning performance, a low power positioning technology has become the focus of discussion in the industry. Currently, based on the market research, when a low power positioning requirement of a terminal is met, the terminal is further required to support reporting of some information of a communication requirement.

Therefore, a solution in which a low power positioning requirement of a terminal can be met and information reporting of the terminal is supported is urgently required.

### SUMMARY

This application provides an information reporting method and a communication apparatus, so that a terminal device further supports information reporting when a low power positioning requirement of the terminal device is met.

According to a first aspect, an information reporting method is provided. The method includes:

A terminal device determines information about at least one of a power consumption parameter, a motion parameter, a notification parameter, and a requirement parameter; and
the terminal device sends one or more reference signals based on the information about the at least one parameter.

In the technical solution of this application, the terminal device sends the one or more reference signals, and the one or more reference signals correspond to information about at least one of the power consumption parameter, the motion parameter, the notification parameter, and the requirement parameter of the terminal device. Because of a correspondence between a reference signal and the information about the at least one parameter, the terminal device can report information that is about a parameter and that corresponds to one or more reference signals by sending the one or more reference signals, so that information can be reported without depending on a data channel. This can reduce power consumption of the terminal device, to meet a requirement of low power positioning.

With reference to the first aspect, in some implementations of the first aspect, that the terminal device sends one or more reference signals based on the information about the at least one parameter includes:

The terminal device sends the one or more reference signals based on a correspondence and the information about the at least one parameter, where the correspondence is a correspondence between P reference signals and Q pieces of information, and P and Q are positive integers, where
the one or more reference signals belong to the P reference signals, the information about the at least one parameter belongs to the Q pieces of information, and the Q pieces of information include information about at least one of the following parameters:
the power consumption parameter;
the motion parameter;
the notification parameter; and
the requirement parameter.

In this implementation, the P reference signals correspond to the Q pieces of information. Based on the correspondence, the terminal reports information by sending a reference signal, so that information can be reported without depending on a data channel. This can reduce complexity and signaling overheads of the terminal device, to reduce power consumption of the terminal device.

With reference to the first aspect, in some implementations of the first aspect, the method further includes:
The terminal device receives configuration information of the P reference signals, where the configuration information includes the correspondence.

According to a second aspect, an information reporting method is provided. The method includes:
A first device receives one or more reference signals from a terminal device; and
the first device determines information about at least one of a power consumption parameter, a motion parameter, a notification parameter, and a requirement parameter of the terminal device based on the one or more reference signals.

In the technical solution of this application, the terminal device sends the one or more reference signals, and the one or more reference signals correspond to information about at least one of the power consumption parameter, the motion parameter, the notification parameter, and the requirement parameter of the terminal device. Because of a correspondence between a reference signal and the information about the at least one parameter, the terminal device sends the one or more reference signals, and the first device receives the one or more reference signals from the terminal device, to obtain information that is about a parameter and that corresponds to the one or more reference signals, so that a requirement that the terminal device supports information reporting can be further met when a low power positioning requirement is met.

With reference to the second aspect, in some implementations of the second aspect, that the first device determines information about at least one of a power consumption parameter, a motion parameter, a notification parameter, and a requirement parameter of the terminal device based on the one or more reference signals includes:

The first device determines the information about the at least one of the power consumption parameter, the motion parameter, the notification parameter, and the requirement parameter of the terminal device based on the one or more reference signals and a correspondence, where the correspondence is a correspondence between P reference signals and Q pieces of information, and P and Q are positive integers, where
the one or more reference signals belong to the P reference signals, the information about the at least one parameter belongs to the Q pieces of information, and the Q pieces of information include information about at least one of the following parameters:
the power consumption parameter;
the motion parameter;
the notification parameter; and
the requirement parameter.

In the technical solution of this application, the P reference signals correspond to the Q pieces of information. Based on the correspondence, the terminal reports information by sending a reference signal, so that information can be reported without depending on a data channel. The first device receives the one or more reference signals from the terminal device, that is, obtains the information corresponding to the one or more reference signals. Based on the method, complexity and signaling overheads of reporting information by the terminal device can be reduced, so as to reduce power consumption of the terminal device.

In addition, the first device does not need to demodulate a data channel, but directly obtains, by receiving the one or more reference signals from the terminal device, the information corresponding to the one or more reference signals, so that complexity and signaling overheads of the first device can be reduced.

With reference to the second aspect, in some implementations of the second aspect, the method further includes: The first device sends configuration information of the P reference signals to the terminal device, where the configuration information includes the correspondence.

In some implementations of the first aspect or the second aspect, the terminal device does not support transmitting at least one of the Q pieces of information by using a physical uplink shared channel PUSCH.

In this implementation, the terminal device reports information without depending on the PUSCH. Compared with supporting information reporting by the terminal depending on the PUSCH, in this application, information corresponding to a reference signal is reported by sending the reference signal (for example, a reference signal used for positioning), so that power consumption of the terminal device can be further reduced.

Particularly, for the terminal in the RRC_INACTIVE state and the RRC_IDLE state, the terminal can report corresponding information only by sending a reference signal used for positioning, and does not need to separately report information by using the PUSCH in addition to sending the reference signal used for positioning. Therefore, compared with a solution in which the terminal in the RRC_INACTIVE state and the RRC_IDLE state reports information by using the PUSCH, the technical solution of this application can further reduce power consumption of the terminal in the RRC_INACTIVE state and the RRC_IDLE state.

In some implementations of the first aspect or the second aspect, the P reference signals include a first reference signal, the Q pieces of information include first information, the first reference signal corresponds to the first information, and the first information indicates information about the power consumption parameter, the motion parameter, the notification parameter, or the requirement parameter.

In this implementation, the first reference signal in the P reference signals uniquely corresponds to the first information in the Q pieces of information, and the first information uniquely indicates information about one parameter. Therefore, information that is about a parameter and that is implicitly indicated by a reference signal is quite clear, so that the terminal device can accurately indicate parameter information.

In some implementations of the first aspect or the second aspect, the P reference signals include a second reference signal, the Q pieces of information include second information, the second reference signal corresponds to the second information, and the second information indicates information about at least two of the following parameters:
the power consumption parameter;
the motion parameter;
the notification parameter; and
the requirement parameter.

In this implementation, one reference signal indicates information about a plurality of parameters, so that resource utilization can be improved, and power consumption of the terminal can be further reduced. In addition, for information about a specific combination of some parameters, this manner of reporting combined information has a practical meaning.

In some implementations of the first aspect or the second aspect, the power consumption parameter includes one or more of the following: a power level, an energy consumption state, and a standby time;
the motion parameter includes one or more of the following: whether the terminal device is in a motion state, whether the terminal device is in a high-speed motion state, whether the terminal device is in a low-speed motion state, a motion speed level, a motion direction, and a motion posture;
the notification parameter includes one or more of the following: a high power indication, a low power indication, a high energy consumption indication, a low energy consumption indication, a high-speed movement indication, a low-speed movement indication, an emergency call alarm, a geo-fence alarm, and a working mode indication; and
the requirement parameter includes a quality of service QoS requirement.

In this implementation, a parameter of the terminal is indicated (or in other words, represented) from a plurality of perspectives. These parameters may reflect a status, an environment, or a situation of the terminal from different perspectives or in different aspects, for example, whether the terminal is in low power or whether the terminal needs urgent rescue. The terminal device reports different parameters, to help the first device (for example, the network side device) determine a status of the terminal device, so as to make a corresponding decision. This is of great significance in actual application.

In some implementations of the first aspect or the second aspect, that the second information indicates information about at least two of the following parameters includes:

The second information indicates the notification parameter and information about at least one of the following parameters: the power consumption parameter, the motion parameter, or the requirement parameter; or,
the second information indicates information about the power consumption parameter and the motion parameter.

In this implementation, reporting information about parameters of some specific combinations can reduce energy consumption of the terminal and improve resource utilization. In addition, these specific combinations better help the first device (for example, the network side) quickly learn a specific combination status (for example, low power and high-speed movement or low power and an emergency call alarm) of the terminal. Compared with the case of separate reporting, obtaining, by the first device, a plurality of pieces of information by receiving a single reference signal can make a proper decision or processing in a more timely manner, to meet requirements in some specific scenarios.

In some implementations of the first aspect or the second aspect, any two of the P reference signals are different in at least one of the following:
a sending period, a reference signal pattern, and a reference signal sequence.

In some implementations of the first aspect or the second aspect, the configuration information further includes a reporting condition of one or more of the Q pieces of information, and the reporting condition of the one or more pieces of information includes one or more of the following:
an alarm threshold range;
a location threshold range;
a power threshold range;
a motion speed threshold range;
an energy consumption threshold range;
a working mode change;
a requirement change; and
a reporting priority sequence of the one or more pieces of information.

In this implementation, the reporting condition is configured for one or more of the Q pieces of information, so that the one or more pieces of information can be reported in an aperiodic or semi-persistent manner. Compared with periodic reporting, in the aperiodic or semi-persistent manner, the terminal does not need to perform reporting frequently. This can further reduce power consumption.

In some implementations of the first aspect or the second aspect, at least one of the P reference signals is a reference signal used for positioning.

Optionally, a possible idea is that all the P reference signals are positioning reference signals. In this implementation, when the terminal reports the information, the network side receives a positioning reference signal, which may be used for positioning, and a positioning service is not interrupted.

In another possible idea, some of the P reference signals are positioning reference signals, and the remaining reference signals are reference signals that are not used for positioning. In this implementation, at a non-reporting moment or when the reporting condition is not met, the terminal sends a positioning reference signal for positioning. In another case, the terminal device sends a reference signal used for a non-positioning purpose. When a total quantity of positioning reference signals is limited, this implementation can increase a capacity of a positioning terminal in a network, that is, increase a quantity of terminals that meet a positioning requirement in the network.

According to a third aspect, a communication apparatus is provided. The communication apparatus has a function of implementing the method in any one of the first aspect or the possible implementations of the first aspect. The function may be implemented by hardware, or may be implemented by hardware executing corresponding software. The hardware or the software includes one or more units corresponding to the foregoing function.

According to a fourth aspect, a communication apparatus is provided. The communication apparatus has a function of implementing the method in any one of the second aspect or the possible implementations of the second aspect. The function may be implemented by hardware, or may be implemented by hardware executing corresponding software. The hardware or the software includes one or more units corresponding to the foregoing function.

According to a fifth aspect, a communication apparatus is provided, including a processor and a memory. Optionally, a transceiver may be further included. The memory is configured to store a computer program. The processor is configured to: invoke and run the computer program stored in the memory, and control the transceiver to receive and send a signal, so that the communication apparatus performs the method in any one of the first aspect or the possible implementations of the first aspect.

For example, the communication apparatus is a terminal device.

According to a sixth aspect, a communication apparatus is provided, including a processor and a memory. Optionally, a transceiver may be further included. The memory is configured to store a computer program. The processor is configured to: invoke and run the computer program stored in the memory, and control the transceiver to receive and send a signal, so that the communication apparatus performs the method in any one of the second aspect or the possible implementations of the second aspect.

For example, the communication apparatus is a network device or a terminal device.

According to a seventh aspect, a communication apparatus is provided, including a processor and a communication interface. The communication interface is configured to: receive data and/or information, and transmit the received data and/or information to the processor, the processor processes the data and/or information, and the communication interface is further configured to output data and/or information processed by the processor, to enable the method in any one of the first aspect or the possible implementations of the first aspect to be performed.

According to an eighth aspect, a communication apparatus is provided, including a processor and a communication interface. The communication interface is configured to: receive data and/or information, and transmit the received data and/or information to the processor, the processor processes the data and/or information, and the communication interface is further configured to output data and/or information processed by the processor, to enable the method in any one of the second aspect or the possible implementations of the second aspect to be performed.

According to a ninth aspect, a computer-readable storage medium is provided. The computer-readable storage medium stores computer instructions. When the computer instructions are run on a computer, the method in any one of the first aspect, the second aspect, or the possible implementations of the aspects is performed.

According to a tenth aspect, a computer program product is provided. The computer program product includes computer program code. When the computer program code is run on a computer, the method in any one of the first aspect, the second aspect, or the possible implementations of the aspects is performed.

According to an eleventh aspect, a wireless communication system is provided, including the communication apparatus according to the third aspect and/or the communication apparatus according to the fourth aspect.

### BRIEF DESCRIPTION OF DRAWINGS

FIG. 1 is a diagram of a system architecture to which this application is applicable;
FIG. 2 is a schematic flowchart of an information reporting method according to this application;
FIG. 3 is an example of a plurality of reference signals according to this application;
FIG. 4 is an example of a plurality of reference signals according to this application;
FIG. 5 is an example of applying an information reporting method to a positioning scenario according to this application;
FIG. 6 is a block diagram of a communication apparatus according to this application; and
FIG. 7 is a diagram of a structure of a communication apparatus according to this application.

### DESCRIPTION OF EMBODIMENTS

The following describes the technical solutions in embodiments of this application with reference to the accompanying drawings.

The method and apparatus provided in embodiments of this application may be applied to various communication systems, for example, a long term evolution (long term evolution, LTE) system, a 5th generation (5th generation, 5G) system, a new radio (new radio, NR) system, a wireless-fidelity (wireless-fidelity, Wi-Fi) system, a communication system related to the 3rd generation partnership project (3rd generation partnership project, 3GPP), another communication system that may appear in the future, or a plurality of communication convergence systems.

The new radio (new radio, NR) supports three radio resource control (radio resource control, RRC) states, including RRC_IDLE (also referred to as an idle state), RRC_INACTIVE (also referred to as an inactive state), and RRC_CONNECTED (also referred to as a connected state).

The UE in different states has different characteristics:
When the UE is in the RRC_IDLE state, the characteristic is that a core network does not reserve RRC context (that is, RRC Context) of the UE. The RRC context is a key parameter for establishing communication between the UE and the network, and specifically includes security context, UE capability information, and the like. This also means that the UE has not established a connection with the core network (core network, CN), that is, the UE is in a CN_IDLE state. In this case, the UE does not have to-be-transmitted data, enters a sleep (sleep) state, and disables a transceiver unit, to reduce power consumption.

When the UE is in the RRC _CONNECTED state, the UE has established the RRC context, all parameters required for establishing communication between the UE and the network are known to both communication parties, the network allocates a C-RNTI to the UE that accesses the network, and the UE and the core network are in a CN_CONNECTED state. In this case, if the UE is transmitting data, the UE is in a continuous reception state. When the UE enters a waiting state after data transmission is completed, the UE switches to a connected state DRX to reduce power consumption. If there is data to be transmitted subsequently, the UE returns to the continuous reception state again.

When the UE is in the RRC_INACTIVE state, the RRC context is reserved between the UE and the network. From the perspective of the core network, the UE is also in the CN CONNECTED state. In this case, a procedure of switching to the connected state to receive data is relatively fast, and no additional core network signaling overheads need to be generated.

The technical solutions of this application are applicable to all the foregoing three RRC states of the terminal device.

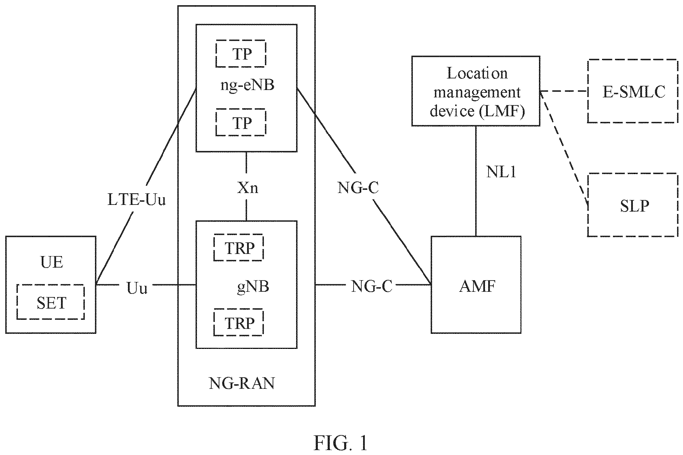

FIG. 1 is a diagram of a system architecture to which this application is applicable. FIG. 1 shows a positioning architecture of a core network (core network) based on the fifth generation (the fifth generation, 5G) communication system. The positioning architecture includes a core network, a radio access network (radio access network, RAN), and a terminal device. The core network includes functional entities such as an access and mobility management function (access and mobility management function, AMF) and a location management function (location management function, LMF). The NG-RAN includes one or more ng-eNBs and one or more gNBs. The ng-eNB is a long term evolution (long term evolution, LTE) base station that accesses the 5G core network, and the gNB is a 5G base station that accesses the 5G core network. In addition, the system architecture may further include one or more terminal devices. The NG-RAN is connected to the core network through the AMF via an NG-C interface. The terminal is connected to the NG-RAN through the ng-eNB and the gNB respectively via an LTE-Uu interface and an NR-Uu interface.

In the positioning architecture based on the 5G core network (5GC for short below), functions of the functional entities are as follows:

A location management device has a positioning function. The location management device in embodiments of this application may include a location management function (location management function, LMF) or a location management component (location management component, LMC), or may be a local location management function (local location management function, LLMF) located in a network device. This is not limited in embodiments of this application. The following embodiments are all described by using an example in which the location management device is an LMF.

The LMF is responsible for supporting different types of location services related to a target UE, including positioning the UE and transferring assistance data to the UE. A control plane and user plane of the LMF are an E-SMLC and an SLP respectively. The LMF may perform the following information exchange with the ng-eNB/gNB and the UE:
(1) The LMF exchanges information with the ng-eNB/gNB by using an NRPPa message, for example, obtaining PRS and SRS configuration information, cell timing, and cell location information.
(2) UE capability information, assistance information, measurement information, and the like are transferred between the LMF and the UE by using LPP messages.

The AMF may receive a location service request related to the target UE from a 5GC location service (location service, LCS) entity, or the AMF itself may start some location services on behalf of the specific target UE, and forward the location service request to the LMF. After receiving location information returned by the UE, the AMF returns the related location information to the 5GC LCS entity.

The terminal device may measure a downlink signal from the NG-RAN and another source to support positioning.

The gNB/ng-eNB may provide measurement information for the target UE and transfer the information to the LMF.

In addition, names of interfaces between network elements shown in FIG. 1 are merely used as examples. In different communication systems, or with evolution of the communication system, the interfaces between the network elements shown in FIG. 1 may alternatively be different from those shown in FIG. 1. This is not limited in this specification.

It should be understood that the gNB/ng-eNB shown in FIG. 1 is an example of a radio access network device.

The network device mentioned in this application is an access device through which the terminal device accesses the mobile communication system in a wireless manner, and includes an access network (access network, AN) device, for example, a base station. The network device may alternatively be a device that communicates with the terminal device over an air interface. The network device may include an evolved NodeB (evolutional NodeB) in a long term evolution (long term evolution, LTE) system or a long term evolution-advanced (long term evolution-advanced, LTE-A) system, where the evolved NodeB may be referred to as an eNB or an e-NodeB for short. The eNB is an apparatus that is deployed in a radio access network, that meets the fourth generation (the fourth generation, 4G) mobile communication technology standard, and that provides a wireless communication function for the terminal device. The network device may alternatively be a new radio controller (new radio controller, NR controller), a gNodeB (gNodeB, gNB) in a 5G system, a central network element (centralized unit), a new radio base station, a radio frequency remote module, a micro base station (also referred to as a small cell), a relay (relay), a distributed unit (distributed unit), a macro base station of various forms, a transmission reception point (transmission reception point, TRP), a transmission measurement function (transmission measurement function, TMF), a transmission point (transmission point, TP), or any other wireless access device, and embodiments of this application are not limited thereto. The network device may alternatively include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like. A specific technology and a specific device form used by the network device are not limited in embodiments of this application. The network device may correspond to the eNB in the 4G system, and correspond to the gNB in the 5G system.

In addition, the base station in embodiments of this application may include a central unit (centralized unit, CU) and a distributed unit (distributed unit, DU), and a plurality of DUs may be centrally controlled by one CU. The CU and the DU may be divided based on protocol layer functions that the CU and the DU each have in a wireless network. For example, functions of a packet data convergence protocol (packet data convergence protocol, PDCP) layer and protocol layers above the packet data convergence protocol layer are disposed on the CU, and functions of protocol layers below the PDCP layer, for example, a radio link control (radio link control, RLC) layer and a medium access control (medium access control, MAC) layer, are disposed on the DU. It should be noted that division of the protocol layers is merely an example, and there may be another division of protocol layers. A radio frequency apparatus may be remote and not placed in the DU, or may be integrated in the DU, or may be partially remote and partially integrated in the DU. This is not limited in embodiments of this application. In addition, in some embodiments, a control plane (control plane, CP) and a user plane (user plane, UP) of the CU may be further separated into different entities for implementation, where the entities are respectively a control plane CU entity (CU-CP entity) and a user plane CU entity (CU-UP entity). In the network architecture, signaling generated by the CU may be sent to the terminal device through the DU, or signaling generated by the UE may be sent to the CU through the DU. The DU may directly transparently transmit the signaling to the UE or the CU through protocol layer encapsulation without parsing the signaling. In the network architecture, the CU is classified as a network device on a radio access network (radio access network, RAN) side. In addition, the CU may alternatively be classified as a network device on a core network (core network, CN) side. This is not limited in this application.

The terminal device mentioned in this application may be user equipment (user equipment, UE), and may also be sometimes referred to as a terminal, an access station, a UE station, a remote station, a wireless communication device, a user apparatus, or the like. The terminal device is a device that has a wireless transceiver function, and may send a signal to the network device, or receive a signal from the network device. The terminal device is configured to connect to a person, an object, a machine, and the like, and may be widely used in various scenarios. For example, the terminal device includes but is not limited to terminal devices in the following scenarios: cellular communication, device-to-device (device-to-device, D2D) communication, vehicle to everything (vehicle to everything, V2X) communication, machine-to-machine/machine-type communications (machine-to-machine/machine-type communications, M2M/MTC), the internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wear, smart transportation, a smart city (smart city), an unmanned aerial vehicle, and a robot.

The terminal device may be a mobile phone (mobile phone), a pad (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a smart speaker in an IoT network, a wireless terminal device in telemedicine, a wireless terminal device in a smart grid, a wireless terminal device in transportation security, a wireless terminal device in a smart city, a wireless terminal device in a smart home, or the like. By way of example instead of limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes.

The terminal device may further include a relay (relay). Alternatively, it is understood that any device that can perform data communication with the base station may be regarded as the terminal device. If various terminal devices described above are located on a vehicle (for example, placed in the vehicle or installed in the vehicle), the terminal devices may be considered as vehicle-mounted terminal devices. For example, the vehicle-mounted terminal devices are also referred to as on-board units (on-board unit, OBU). In addition, in embodiments of this application, the terminal device may be an apparatus configured to implement a function of a terminal, or may be an apparatus, for example, a chip system, that can support the terminal device in implementing the function. The apparatus may be installed in the terminal device. For example, the terminal device may alternatively be a vehicle detector. In embodiments of this application, the chip system may include a chip, or may include a chip and another discrete component. In the technical solutions provided in embodiments of this application, an example in which the apparatus configured to implement the function of the terminal is the terminal device is used for describing the technical solutions provided in embodiments of this application.

Currently, low power positioning is a mainstream positioning requirement, and many users expect that the terminal can be supported in reporting some information about a communication requirement when a low power positioning requirement is met. Some solutions propose that the terminal reports some information about the communication requirement to a network side in a small packet data transmission (small data transmission, SDT) manner. However, in this reporting manner, the terminal needs to depend on a physical uplink shared channel (physical uplink shared channel, PUSCH) to carry information. However, if the SDT is specially supported to implement information reporting, there is no doubt that complexity and power consumption of the terminal are increased. This is against the requirement for low power positioning.

Therefore, this application provides an information reporting method, to support the terminal in reporting information to a network when a low power positioning requirement is met.

The following describes the information reporting method provided in this application.

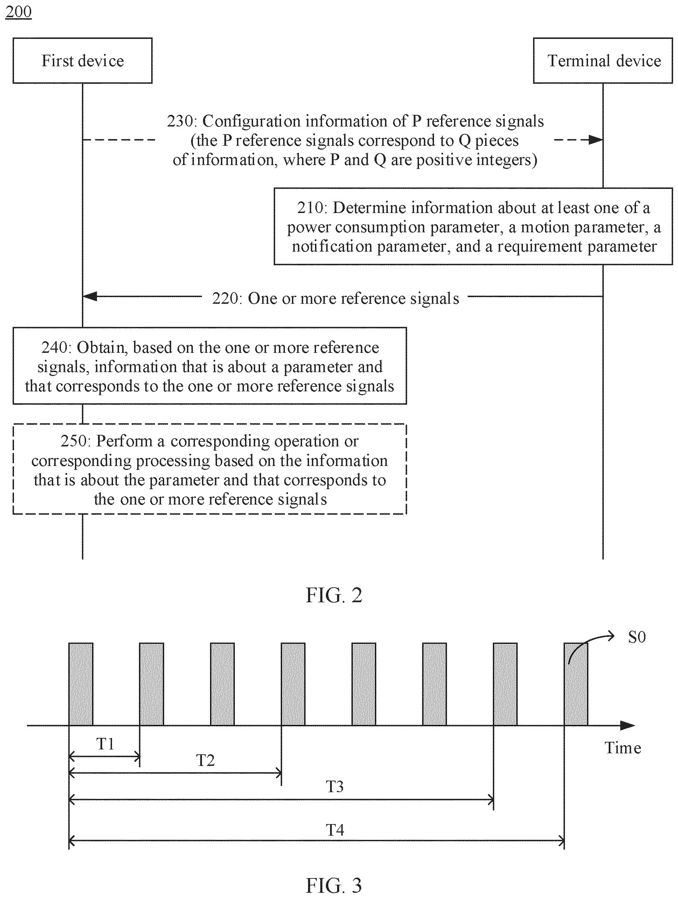

FIG. 2 is a schematic flowchart of an information reporting method according to this application.

210: A terminal device determines information about at least one of a power consumption parameter, a motion parameter, a notification parameter, and a requirement parameter.

Specifically, the terminal device may obtain information about a corresponding parameter by using a built-in processor, a built-in sensor, an external interface, and the like.

For example, the power consumption parameter includes one or more of the following: a power level, an energy consumption state, and a standby time. For example, the terminal device may directly obtain currently consumed power or a remaining power by using a voltameter or the like, or calculate the currently consumed power or the remaining power by using parameters such as a resistance value, a current value, and a voltage value of a battery, or obtain information related to the power consumption parameter in another manner. Optionally, the power level may be a level of the remaining power of the terminal or a level of the consumed power. Optionally, the standby time may be a remaining standby time of the terminal or a standby time that has been used by the terminal.

The motion parameter includes one or more of the following: whether the terminal device is in a motion state, whether the terminal device is in a high-speed or low-speed motion state, a motion speed level, a motion direction, and a motion posture. For example, the terminal device may directly obtain a current motion speed/direction/posture by using a gyroscope, a speedometer, a speed sensor, or the like, or calculate the current motion speed/direction/posture by using parameters such as a motion time and a motion distance, or obtain information related to the motion parameter of the terminal device through information transmission (for example, information change with a network) of an external interface.

The notification parameter includes one or more of the following: a high power indication, a low power indication, a high energy consumption indication, a low energy consumption indication, a high-speed movement indication, a low-speed movement indication, a working mode indication, an emergency call alarm, and a geo-fence alarm. The emergency call alarm (or referred to as an SOS alarm) includes a 110 alarm, a fire alarm, an earthquake alarm, a natural disaster alarm, and the like.

In addition, the geo-fence alarm is an alarm generated when the terminal device moves out of or enters a specific region.

For example, a manner of obtaining information about the parameters such as the high power indication and the low power indication is the same as a manner of obtaining the power consumption parameter; and a manner of obtaining information about the parameters such as the high-speed movement indication, the low-speed movement indication, and the geo-fence alarm is the same as a manner of obtaining the motion parameter. For the emergency call alarm, the terminal device may directly obtain a current terminal status by using a seismometer, a temperature sensor, or the like, or obtain information related to the alarm parameter of the terminal device through information transmission (for example, information change with another terminal) of an external interface.

The requirement parameter includes a QoS requirement of the terminal device.

Further, the QoS requirement includes positioning accuracy, a delay, reliability, a standby time, and the like. For example, the terminal device may judge or determine a current QoS requirement by itself, or obtain information related to the requirement parameter of the terminal device through information transmission (for example, information change with a network) of an external interface.

It should be understood that the foregoing parameters are merely examples. Based on a specific application scenario, fewer or more items may be configured for each parameter. This is not limited in this application.

220: The terminal device sends one or more reference signals based on the information about the at least one parameter. A first device receives the one or more reference signals from the terminal device.

Specifically, the terminal device sends the one or more reference signals based on the information about the at least one parameter and a correspondence.

The correspondence is a correspondence between P reference signals and Q pieces of information, and P and Q are positive integers.

It should be understood that the one or more reference signals sent by the terminal device in step 220 belong to the P reference signals, and the information about the at least one of the power consumption parameter, the motion parameter, the notification parameter, and the requirement parameter of the terminal device belongs to the Q pieces of information. The Q pieces of information include information about at least one of the following parameters:
the power consumption parameter;
the motion parameter;
the notification parameter; and
the requirement parameter.

Optionally, the first device may be a network device. For example, the network device may be a base station, for example, a gNB or an NG-eNB. Alternatively, the first device may be a location management device, for example, an LMF.

Optionally, the first device may alternatively be another terminal device. Therefore, the technical solutions of this application are also applicable to information sending in a sidelink (sidelink, SL) or short-distance communication (such as Bluetooth, wireless-fidelity (wireless-fidelity, Wi-Fi), or a wireless local area network (wireless local area network, WLAN)).

In this application, the P reference signals correspond to the Q pieces of information. Therefore, that the terminal device sends one or more of the P reference signals means that the terminal device sends information respectively corresponding to the one or more reference signals.

For example, the P reference signals include a first reference signal, and the first reference signal corresponds to first information in the Q pieces of information. That the terminal device sends the first reference signal means that the terminal device sends the first information, or in other words, the terminal device sends the first information by sending the first reference signal, or in other words, the terminal device carries or indicates the first information by using the first reference signal. Herein, the first reference signal is any reference signal in the P reference signals.

In this application, using an example in which the first reference signal corresponds to the first information, that the first reference signal corresponds to the first information may be understood as follows:

The first reference signal implicitly indicates the first information;
the first reference signal carries the first information;
there is a correspondence (or in other words, an association relationship or a mapping relationship) between the first reference signal and the first information; or
if the first device receives the first reference signal from the terminal device, the first device obtains the first information.

It may be understood that, on a basis that the P reference signals correspond to the Q pieces of information, the terminal device can report information corresponding to a reference signal by sending the reference signal.

In a possible implementation, that the P reference signals correspond to the Q pieces of information may be predefined, and both the terminal device and the first device know the correspondence between the P reference signals and the Q pieces of information. In this implementation, because the reference signal carries corresponding information, and the correspondence between the P reference signals and the Q pieces of information does not need to be specially configured, the predefining manner can further reduce complexity and signaling overheads of the terminal device, and reduce power consumption of the terminal device.

In another possible implementation, the first device sends configuration information of the P reference signals to the terminal device, where the configuration information includes the correspondence. Optionally, the method 200 may further include step 230.

230: The first device sends the configuration information of the P reference signals to the terminal device, where the terminal device receives the configuration information of the P reference signals from the first device. The configuration information includes the correspondence between the P reference signals and the Q pieces of information.

Optionally, in some implementations, the P reference signals include the first reference signal, the Q pieces of information include the first information, the first reference signal corresponds to the first information, and the first information indicates information about the power consumption parameter, the motion parameter, the notification parameter, or the requirement parameter.

In other words, the first reference signal uniquely corresponds to information about one of the at least one parameter of the terminal device, or in other words, the first reference signal is in a one-to-one correspondence with the information about one of the at least one parameter.

Optionally, in some implementations, the P reference signals include a second reference signal, the Q pieces of information include second information, the second reference signal corresponds to the second information, and the second information indicates information about at least two of the following parameters:
the power consumption parameter;
the motion parameter;
the notification parameter; and
the requirement parameter.

In other words, the second reference signal corresponds to information about two or more parameters of the terminal device.

It should be understood that the Q pieces of information may all be the first information, or the Q pieces of information may all be the second information, or the Q pieces of information include both the first information and the second information.

Because of the correspondence between the reference signal and the information about the parameter of the terminal device, that the terminal device sends the one or more reference signals to the first device is equivalent to that the terminal device sends, to the first device, the information that is about the at least one parameter and that corresponds to the one or more reference signals.

In an implementation in which the first device is the network device, the configuration information may be transmitted to the terminal device by using downlink control information, media access control (medium access control, MAC) signaling, radio resource control (radio resource control, RRC) signaling, or the like. In an implementation in which the first device is the terminal device, the configuration information may be transmitted by another terminal device to the terminal device by using a sidelink (sidelink, SL) message or another short-distance communication message, for example, Bluetooth, wireless-fidelity (wireless-fidelity, Wi-Fi), or a wireless local area network (wireless local area network, WLAN). This is not limited in this application.

240: The first device obtains, based on the one or more reference signals, the information that is about the at least one parameter and that corresponds to the one or more reference signals.

That the first device receives the one or more reference signals from the terminal device is equivalent to that the first device receives, from the terminal device, the information that is about the parameter and that corresponds to the one or more reference signals. Therefore, the first device may learn, based on the received one or more reference signals, the information that is about the at least one parameter, that corresponds to the one or more reference signals, and that is reported by the terminal device.

In this embodiment of this application, the P reference signals correspond to the Q pieces of information. Based on the correspondence, the terminal reports information by sending a reference signal, so that information can be reported without depending on a data channel. This can reduce complexity and signaling overheads of the terminal device, to reduce power consumption of the terminal device, thereby meeting a requirement of low power positioning.

In the foregoing embodiments, any two of the P reference signals are different in at least one of the following:
a sending period, a reference signal pattern, and a reference signal sequence.

For ease and clarity of description, for example, the following describes one reference signal from one or more of three dimensions: a sending period, a reference signal pattern, and a reference signal sequence, where "more" means two or more. Optionally, one reference signal may alternatively be described by using three or more dimensions. This is not limited.

Optionally, when only some dimensions of a reference signal are concerned, one or two (that is, only some dimensions rather than all dimensions) of the foregoing three dimensions may be used to describe one reference signal.

For example, S0, S1, S2, and S3 are four reference signals, and reference signal sequences of the four reference signals are different. S0 to S3 respectively represent four different reference signal sequences.

For another example, (S0, T1), (S0, T2), (S0, T3), and (S0, T4) are four reference signals, and sending periods of the four reference signals are different. T1 to T4 respectively represent four different sending periods.

For another example, (S0, p1), (S0, p2), (S0, p3), and (S0, p4) are four reference signals, reference signal patterns of the four reference signals are different, and p1 to p4 respectively represent four different reference signal patterns.

For another example, (S0, T1, p1), (S0, T2, p2), (S1, T1, p3), and (S2, T2, p2) are four reference signals, which are respectively denoted as a reference signal 1 to a reference signal 4.

Sending periods of the reference signal 1 and the reference signal 2 are different, and reference signal patterns of the reference signal 1 and the reference signal 2 are different.

Reference signal sequences of the reference signal 1 and the reference signal 3 are different, and reference signal patterns of the reference signal 1 and the reference signal 3 are different.

Reference signal sequences of the reference signal 2 and the reference signal 4 are different.

Reference signal sequences of the reference signal 3 and the reference signal 4 are different, sending periods of the reference signal 3 and the reference signal 4 are different, and reference signal patterns of the reference signal 3 and the reference signal 4 are also different.

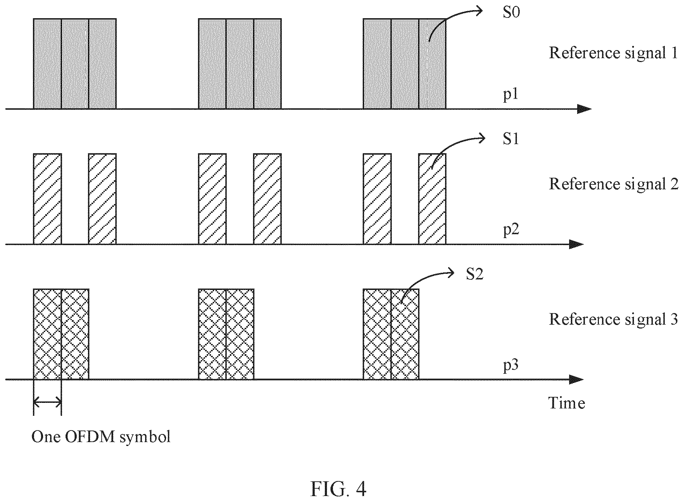

FIG. 3 and FIG. 4 are examples of a plurality of reference signals according to this application.

As shown in FIG. 3, FIG. 3 shows four different reference signals, where sending periods of the four reference signals are different, and other features (reference signal sequences and reference signal patterns) are the same.

FIG. 4 shows three reference signals, which are respectively a reference signal 1 to a reference signal 3. Sending periods of the reference signal 1 to the reference signal 3 are the same, but reference signal sequences or reference signal patterns of the reference signal 1 to the reference signal 3 are different. For example, the reference signal 1 uses a reference signal sequence S0 and a reference signal pattern p1. For example, p1 may be represented by "111", and p1 indicates that the sequence S0 is sent on three contiguous symbols. The reference signal 2 uses a reference signal sequence S1 and a reference signal pattern p2. For example, p2 may be represented by "101", and p2 indicates that the sequence S1 is sent on the first symbol and the third symbol of three contiguous symbols, and the sequence S1 is not sent on the middle symbol. The reference signal 3 uses a reference signal sequence S2 and a reference signal pattern p3. For example, p3 may be represented by "110", and p3 indicates that the sequence S2 is sent on the first two symbols of three contiguous symbols, and S2 is not sent on the third symbol.

In addition, any two or more of the P reference signals may also be configured to be different in one or more of the following:
a sending priority, a sending start time, a sending end time, and sending duration.

In addition, to increase a capacity of the terminal device, at least one of the P reference signals is a reference signal used for positioning.

As described above, the Q pieces of information are information about the at least one parameter of the terminal device. The at least one parameter includes but is not limited to the power consumption parameter, the motion parameter, the notification parameter, and the requirement parameter.

The following describes the parameters of the terminal device by using examples.

In the following description, the symbol "/" indicates that associated objects before and after the symbol are in an "or" relationship. For example, a/b indicates a or b.

### (1) Power consumption parameter

The power consumption parameter is a parameter related to power consumption of the terminal device, and includes but is not limited to the power level, the energy consumption state, the standby time, and the like.

The power level may represent a level of a remaining power of the terminal device, and the power of the terminal device may be divided into four power levels in advance. For example, a remaining power greater than 75% is a power level 4, a remaining power greater than 50% and less than or equal to 75% is a power level 3, a remaining power greater than 25% and less than or equal to 50% is a power level 2, and a remaining power less than or equal to 25% is a power level 1. When the remaining power of the terminal device meets a power threshold range corresponding to a power level, the terminal device reports the corresponding power level. Optionally, the power level may also indicate a level of power that has been consumed by the terminal device. This is not limited.

The energy consumption state (for example, unit energy consumption) may reflect an energy consumption reduction state of the terminal device. The terminal device may report the energy consumption state once at intervals.

The standby time reflects a time that can be maintained by the terminal device through consumption of the battery until the terminal device is powered off or a low power threshold is reached in a standby state. Optionally, the standby time may be a remaining standby time of the terminal device, or may be a standby time that has been used by the terminal. This is not limited.

It can be learned that these power consumption parameters may reflect power consumption of the terminal device from different perspectives or aspects. The terminal device reports the power consumption parameter, to help the first device (for example, a network side device) determine a power consumption status of the terminal device, so as to make a corresponding decision, for example, replace a battery or adjust a resource allocation policy.

It can be learned from the foregoing that sending power consumption parameters (for example, the power level, the energy consumption state, and the standby time) by the terminal device is specifically sending reference signals corresponding to information about these power consumption parameters.

For example, four power levels are preset for the terminal device, which are respectively the power level 1 to the power level 4, and information about the four power levels respectively corresponds to four reference signals, which are respectively the reference signal 1 to the reference signal 4. When the terminal device detects that the remaining power of the terminal device reaches the power level 3, the terminal device sends a reference signal corresponding to information about the power level 3, that is, sends the reference signal 3. When the terminal device detects that the remaining power reaches the power level 4, the terminal device sends the reference signal 4 corresponding to information about the power level 4.

For example, the first device is a network device. Because of a correspondence between a reference signal and information about a power consumption parameter of the terminal device, when the network side receives the reference signal 3 from the terminal device, the network side receives the information about the power level 3 of the terminal device. When the network side receives the reference signal 4 sent by the terminal device, the network side receives the information about the power level 4 of the terminal device.

### (2) Motion parameter

The motion parameter is a parameter related to a motion state of the terminal device, and includes but is not limited to whether the terminal device is in a motion state, whether the terminal device is in a high-speed/low-speed motion state, a motion speed level, a motion direction, a motion posture, and the like.

The motion speed level is used as an example. Several motion speed levels are set. For example, four motion speed levels are set, and each motion speed level corresponds to a motion speed range or intensity of the terminal device. For example, being static corresponds to a motion speed level 1, low-speed movement corresponds to a motion speed level 2, medium-speed movement corresponds to a motion speed level 3, and high-speed movement corresponds to a motion speed level 4. Being static, low speed, medium speed, and high speed each correspond to a specific rate range. Specifically, a current movement speed of the terminal device may be determined by setting a rate threshold. Alternatively, six motion levels are set, which are respectively being static, low-speed walking, medium-speed walking, jogging, medium-speed running, and high-speed running. A movement status of the terminal device may be detected by a sensor such as a gyroscope or a speedometer, or may be obtained through calculation, or may be obtained by directly exchanging information with another device/network through an external interface.

For another example, a motion direction reflects a movement direction of the terminal device, and a coarse-grained direction or a fine-grained direction may be set based on a specific application scenario. For example, the coarse-grained direction is used as an example. A location is used as a reference point to detect a direction in east, west, south, or north of the reference point toward which the terminal device moves, or the terminal device itself is used as a reference point, and a motion direction may include rising, falling, moving forward, moving backward, moving left, moving right, or the like. Alternatively, the fine-grained direction is used as an example. A specific geographical range is used for reference. Several main landmarks are set for the geographical range, and a building in the several landmarks toward which the terminal device moves is detected.

The motion posture may be used for description of motion states of some specific terminal devices, for example, an unmanned aerial vehicle and an augmented reality (augmented reality, AR)/virtual reality (virtual reality, VR) device. The motion posture includes a motion pose (such as rolling, tilting, and yawing), a mode (such as a positioning mode, a posture mode, and a motion mode), and the like.

It can be learned that these motion parameters may reflect a motion state of the terminal device from different perspectives or aspects. The terminal device reports the motion parameter, to help the first device (for example, the network side device) learn a motion state of the terminal device, thereby monitoring the terminal device, for example, in scenarios such as person monitoring in a prison management system, sensor monitoring in a smart farm, and unmanned aerial vehicle operation.

Similar to the power consumption parameter, it is assumed that three motion levels are preset for the terminal device, which are respectively a motion level 1 to a motion level 3, and information about the three motion levels respectively corresponds to three reference signals, which are respectively a reference signal 5 to a reference signal 7. When the terminal device detects that a motion speed of the terminal device reaches the motion level 3, the terminal device sends a reference signal corresponding to information about the motion level 3, that is, sends the reference signal 7.

For another example, the P reference signals further include a reference signal 8, and the reference signal 8 corresponds to that the terminal device is in a high-speed motion state. When the terminal device detects that the motion speed of the terminal device reaches high-speed motion, the terminal device sends the reference signal 8.

For example, the first device is a network device. Because of a correspondence between a reference signal and information about a motion parameter of the terminal device, when the network side receives the reference signal 7 from the terminal device, the network side learns information that the terminal device reaches the motion level 3. When the network side receives the reference signal 8 sent by the terminal device, the network side learns information that the terminal device is in a high-speed motion state.

### (3) Notification parameter

The notification parameter is a parameter related to various alarms of the terminal device. The notification parameter includes but is not limited to the high power indication, the low power indication, the high energy consumption indication, the low energy consumption indication, the high-speed movement indication, the low-speed movement indication, the emergency call alarm (or referred to as the SOS alarm), the geo-fence alarm, the fire alarm, the earthquake alarm, the natural disaster alarm, the working mode indication, and the like.

Optionally, the working mode may include a sleep mode, a power saving mode, a low power consumption mode, a normal mode, a motion mode, a static mode, a communication mode, a positioning mode, and the like.

It should be understood that, these working modes describe working statuses of the terminal device from different perspectives. In specific implementation, it is not limited to configuring several or all of the working modes, and establishing a correspondence between the working modes and the reference signals. When the working mode of the terminal device is switched, the terminal device sends a corresponding reference signal, to indicate switching of the working mode.

The low power indication is used as an example. When the remaining power of the terminal device is equal to or less than a specified power threshold, the terminal device sends the low power indication. For example, the specified power threshold is 10%. When the remaining power of the terminal device is equal to or less than 10%, the terminal device sends the low power indication.

The emergency call alarm is used as an example. When the terminal device detects an operation of triggering the emergency call alarm, the terminal device sends the emergency call alarm.

The geo-fence alarm is used as an example. A geo-fence is preset. When detecting that a geographical location of the terminal device meets a location threshold range, the terminal device sends the geo-fence alarm.

The fire alarm is used as an example. When the terminal device detects that the surrounding environment reaches a preset alarm threshold range, the terminal device sends the fire alarm. For example, when the terminal device detects that the ambient temperature reaches a preset temperature threshold and detects that smoke concentration reaches a preset concentration threshold, the terminal device sends the fire alarm.

As described above, sending the notification parameter (for example, the high power indication, the low power indication, the high energy consumption indication, the low energy consumption indication, the high-speed movement indication, the low-speed movement indication, the working mode indication, the emergency call alarm, the geo-fence alarm, or the fire alarm) by the terminal device is specifically sending a reference signal corresponding to information about the notification parameter.

For example, the P reference signals include a reference signal 9, and the reference signal 9 corresponds to the low power indication. Sending the low power indication by the terminal device is specifically sending the reference signal 9. When the network side receives the reference signal 9 from the terminal device, the network side receives information about the low power indication of the terminal device. For another example, the P reference signals further include a reference signal 10, and the reference signal 10 corresponds to the geo-fence alarm. When detecting that a geographical location of the terminal device meets a location threshold range, the terminal device sends the reference signal 10. When the network side receives the reference signal 10 sent by the terminal device, the network side receives information about the geo-fence alarm of the terminal device.

The terminal device reports the notification parameter, to help the first device (for example, the network side device) learn in time whether the terminal device is in an emergency, so as to take a corresponding measure, for example, search for and rescue, in time, the terminal that sends the notification parameter.

### (4) Requirement parameter.

The requirement parameter is parameter related to a requirement of the terminal device, and includes but is not limited to a QoS requirement.

For example, the QoS requirement includes positioning accuracy, a delay, and a reliability level.

The positioning accuracy is used as an example. It is assumed that two pieces of positioning accuracy are set for the terminal device, which are respectively positioning accuracy 1 and positioning accuracy 2, where the positioning accuracy 1 and the positioning accuracy 2 correspond to reference signals 11 and 12. When the terminal device supports the positioning accuracy 2 in some positioning scenarios, the terminal device sends the reference signal 12. For example, the first device is a network device. In a specific positioning scenario, if the network side receives the reference signal 12 from the terminal device, the network side learns information that the terminal device supports the positioning accuracy 2.

It may be understood that, based on the idea of the technical solutions of this application, a person skilled in the art may configure a proper parameter in a specific application scenario, and establish a correspondence between a reference signal and information about the configured parameter. In this way, the terminal implicitly indicates, by sending the reference signal, the information that is about the parameter and that corresponds to the reference signal, to report the information about the parameter. This can reduce complexity and power consumption of the terminal device compared with a solution in which the terminal device reports information depending on a PUSCH. Especially in a low power positioning scenario, information about a related parameter of the terminal device is implicitly reported by using a positioning reference signal, to better meet a requirement of low power positioning.

In this application, for one of the P reference signals, the reference signal uniquely corresponds to one of the Q pieces of information. The information may be information about one parameter of the terminal device, or may be information about at least two (two or more) parameters.

In other words, for one of the Q pieces of information, the information may be information about one parameter, or may be a combination of information about a plurality of parameters. "A plurality of" means two or more than two.

Certainly, the foregoing two implementations may be used in combination. For example, the P reference signals correspond to the Q pieces of information, some of the Q pieces of information indicate information about only one parameter of the terminal device, and some of the Q pieces of information indicate information about a plurality of parameters.

The following describes, by using examples, that the P reference signals correspond to the Q pieces of information.

For ease of description, it is first assumed that the terminal device supports reporting of the Q pieces of information. In an example, Q=13, and the 13 pieces of information are shown in Table 1.

**Table 1**

| Q pieces of information (Q=13) | Information that is about parameters and that is respectively indicated by the Q pieces of information | Parameter classification |
|---|---|---|
| a1 | Low power indication | Notification parameter |
| a2 | Emergency call alarm | |
| b1 | Power level 1 | Power parameter |
| b2 | Power level 2 | |
| b3 | Power level 3 | |
| b4 | Power level 4 | |
| c1 | Motion speed level 1 | Motion parameter |
| c2 | Motion speed level 2 | |
| c3 | Motion speed level 3 | |
| d1 | Positioning accuracy 1 | Requirement parameter |
| d2 | Positioning accuracy 2 | |
| d3 | Target delay 1 | |
| d4 | Target delay 2 | |

As shown in Table 1, each of the Q pieces of information is information about one parameter of the terminal device.

For example, a1 corresponds to the low power indication, a2 corresponds to the emergency call alarm, b 1 corresponds to the power level 1, b3 corresponds to the power level 3, c1 corresponds to the speed level 1, c3 corresponds to the speed level 3, d2 corresponds to the positioning accuracy 2, and d4 corresponds to the target delay 2.

In this application, there are a plurality of possible implementations in which the P reference signals correspond to the Q pieces of information.

In a possible implementation, P=Q.

In this implementation, each of the P reference signals uniquely corresponds to one of the Q pieces of information, that is, the Q reference signals are in a one-to-one correspondence with the Q pieces of information, as shown in an example in Table 2.

In this implementation, an example in which P=Q=9 is used for description, as shown in the example in Table 2.

**Table 2**

| P reference signals (P=9) | Q pieces of information (Q=9) | Information that is about parameters and that is respectively indicated by the Q pieces of information |
|---|---|---|
| Reference signal 1 | a1 | Low power indication |
| Reference signal 2 | a2 | Emergency call alarm |
| Reference signal 3 | b1 | Power level 1 |
| Reference signal 4 | b2 | Power level 2 |
| Reference signal 5 | b3 | Power level 3 |
| Reference signal 6 | b4 | Power level 4 |
| Reference signal 7 | c1 | Motion speed level 1 |
| Reference signal 8 | c2 | Motion speed level 2 |
| Reference signal 9 | c3 | Motion speed level 3 |

In an implementation in which P is equal to Q, each of the P reference signals uniquely corresponds to one of the Q pieces of information, and each of the Q pieces of information uniquely indicates information about one parameter. Therefore, information that is about a parameter and that is implicitly indicated by a reference signal is quite clear, and a parameter of the terminal device can be accurately indicated.

In another implementation, P is greater than Q.

In this implementation, some of the P reference signals may correspond to a same piece of information in the Q pieces of information. For example, the P reference signals include a reference signal a and a reference signal b, and the reference signal a and the reference signal b correspond to a same piece of information in the Q pieces of information. In this case, each of the P reference signals uniquely corresponds to one of the Q pieces of information. However, from the perspective of one of the Q pieces of information, one piece of information may correspond to one or more reference signals, and "more" means two or more, as shown in an example in Table 3.

**Table 3**

| P reference signals (P=8) | Q pieces of information (Q=6) | Information that is about parameters and that is respectively indicated by the Q pieces of information |
|---|---|---|
| Reference signal 1 | a1 | Low power indication |
| Reference signal 2 | a2 | Emergency call alarm |
| Reference signal 3, reference signal 4 | b1 | Power level 1 |
| Reference signal 5 | b2 | Power level 2 |
| Reference signal 6 | c1 | Motion speed level 1 |
| Reference signal 7, reference signal 8 | c2 | Motion speed level 2 |

As shown in Table 3, both the reference signal 3 and the reference signal 4 correspond to the power level 1, and both the reference signal 7 and the reference signal 8 correspond to the motion speed level 2.

In addition, in the example of Table 3, each of the Q pieces of information is information about one parameter of the terminal device, and each of the P reference signals uniquely corresponds to one of the Q pieces of information. Therefore, each of the P reference signals corresponds to information about one parameter of the terminal device.

In an implementation in which P is greater than Q, a case in which a plurality of reference signals correspond to a same piece of information is designed, and adaptation may be performed based on a status, an environment, or a requirement of the terminal device.

For example, when different reference signals correspond to a same piece of information in the Q pieces of information, the different reference signals may be applicable to different QoS requirements (for example, power consumption requirements). For example, in Table 3, a sending period of the reference signal 7 is different from a sending period of the reference signal 8. Assuming that the sending period of the reference signal 7 is denser than the sending period of the reference signal 8, when a remaining power of the terminal device is relatively high, the reference signal 7 may be used to report the motion speed level 2; or when the remaining power of the terminal device is relatively low, the reference signal 8 may be used to report the motion speed level 2. It can be learned that such a manner can better adapt to the remaining power of the terminal.

In addition, in another implementation, P is less than Q.

**Table 4**

| P reference signals (P=4) | Q pieces of information (Q=6) | Information that is about parameters and that is respectively indicated by the Q pieces of information |
|---|---|---|
| Reference signal 1 | a1, a2 | Motion speed level 1, motion speed level 2 |
| Reference signal 2 | b2 | Emergency call alarm |
| Reference signal 3 | c1 | Power level 1 |
| Reference signal 4 | c2, c3 | Power level 2, power level 3 |

As shown in the example of Table 4, the reference signal 1 corresponds to a1 and a2, both a1 and a2 are information about the motion parameter, the reference signal 4 corresponds to c2 and c3, and both c2 and c3 are information about the power consumption parameter. For example, the motion speed level 1 indicates being static, the motion speed level 2 indicates low-speed motion, and both a1 and a2 indicate that the terminal device is in a state of moving at a relatively low speed. The power level 2 indicates that the remaining power of the terminal device is greater than 75%, the power level 3 indicates that remaining power of the terminal device is greater than 90%, and both c2 and c3 indicate that the remaining power of the terminal device is in a relatively sufficient state. These states of the terminal device do not need to be specially processed by the network side. Therefore, one reference signal is used to correspond to different information of one parameter, so that reference signal resource utilization can be improved.

The foregoing examples are merely used as examples. A person skilled in the art may configure the correspondence between the P reference signals and the Q pieces of information in a targeted manner based on this design idea for a specific application scenario, to obtain better system performance.

In the foregoing embodiments, each of the P reference signals uniquely corresponds to information about one parameter of the terminal device.

Specifically, the P reference signals correspond to the Q pieces of information, the P reference signals include the first reference signal, the Q pieces of information include the first information, the first reference signal corresponds to the first information, and the first information indicates information about one parameter of the terminal device. For example, the first information indicates information about one of the power consumption parameter, the motion parameter, the notification parameter, or the requirement parameter.

Optionally, there may be one or more first reference signals. This is not limited.

Optionally, the P reference signals include a second reference signal, the Q pieces of information include second information, the second reference signal corresponds to the second information, and the second information indicates information about at least two of the following parameters of the terminal device:
the power consumption parameter;
the motion parameter;
the notification parameter; and
the requirement parameter.

In other words, the second reference signal in the P reference signals indicates information about two or more parameters.

The following describes this implementation by using an example in Table 5.

It is assumed that Q=7, and the Q pieces of information are respectively denoted as q1 to q7. In addition, it is assumed that P=Q=7, and the seven reference signals are respectively denoted as a reference signal 1 to a reference signal 7. A correspondence between the reference signal 1 to the reference signal 7 and q1 to q7 is shown in Table 4.

**Table 5**

| P reference signals (P=7) | Q pieces of information (Q=7) | Information that is about parameters and that is respectively indicated by the Q pieces of information |
|---|---|---|
| Reference signal 1 | q1 | Low power indication+motion speed level 3 |
| Reference signal 2 | q2 | Emergency call alarm |
| Reference signal 3 | q3 | Emergency call alarm+power level 1 |
| Reference signal 4 | q4 | Emergency call alarm+motion speed level 3 |
| Reference signal 5 | q5 | Power level 2+motion speed level 2 |
| Reference signal 6 | q6 | Power level 3+motion speed level 2 |
| Reference signal 7 | q7 | Power level 4 |

As shown in Table 5, the reference signal 1 corresponds to q1, and q1 indicates information about the low power indication and the motion speed level 3, that is, q1 indicates the information about the power consumption parameter and the motion parameter.

The reference signal 2 corresponds to q2, and q2 indicates information about the emergency call alarm, that is, q2 indicates the information about the notification parameter.

The reference signal 3 corresponds to q3, and q3 indicates information about the emergency call alarm and the power level 1, that is, q3 indicates the information about the notification parameter and the power consumption parameter.

The reference signal 4 corresponds to q4, and q4 indicates information about the emergency call alarm and the motion speed level 3, that is, q4 indicates the information about the notification parameter and the motion parameter.

The reference signal 5 corresponds to q5, and q5 indicates information about the power level 2 and the motion speed level 2, that is, q5 indicates the information about the power consumption parameter and the motion parameter.

The reference signal 6 corresponds to q6, and q6 indicates information about the power level 3 and the motion speed level 2, that is, q6 indicates the information about the power consumption parameter and the motion parameter.

The reference signal 7 corresponds to q7, and q7 indicates information about the power level 4, that is, q7 indicates the power consumption parameter.

In the example of Table 4, the reference signals 1, 3, 4, 5, and 6 respectively correspond to two of the Q pieces of information, or in other words, each of the reference signals 1, 3, 4, 5, and 6 indicates (or carries) information about two parameters in the Q parameters. The reference signal 2 and the reference signal 7 each correspond to one of the Q pieces of information, that is, both the reference signal 2 and the reference signal 7 indicate information about one parameter.

In the example of Table 5, P=Q. It should be understood that, based on the implementation in which P is greater than Q or P is less than Q in the foregoing embodiment, when the second reference signal indicates information about at least two parameters, a relationship between P and Q may alternatively be designed as that P is greater than Q or P is less than Q. This is not limited in this specification.

The design in which P is less than Q can reduce reference signal resource overheads in some application scenarios, and further reduce power consumption of the terminal device.

For example, assuming that the power level 2 in Table 4 indicates that the remaining power is greater than 80%, and the motion speed level 2 indicates low-speed motion or being static, regardless of whether the terminal device reports information about the power level 2 or the motion speed level 2, for the network side, this is a case in which emergency processing is relatively not required. Therefore, one reference signal (for example, the reference signal 4 in Table 4) may be used to correspond to both the power level 2 and the motion level 2. If the network side receives the reference signal 4, although whether reporting is for the power level 2 or for the motion level 2 cannot be distinguished, no special processing is required. Certainly, different sending times may also be configured for the reference signal 4 to distinguish (or in another distinguishing manner) reporting for the power level 2 or reporting for the motion level 2. The emergency call alarm is information reporting that needs to be preferentially processed by the network side and that has a quite high level. Therefore, a reference signal (for example, the reference signal 2 in Table 4) needs to be configured to uniquely correspond to information about the emergency call alarm, so that when receiving the reference signal 2, the network side can uniquely and quickly recognize the information about the emergency call alarm of the terminal device.

One reference signal indicates information about a plurality of parameters, so that resource utilization can be improved, and power consumption can be further reduced. In addition, for information about a specific combination of some parameters, this manner of reporting combined information has a practical meaning.

As described above, the P reference signals include the second reference signal, the second reference signal corresponds to the second information in the Q pieces of information, and the second information indicates information about at least two parameters of the terminal device. For example, the second information indicates information about the following parameters:
the notification parameter and the power consumption parameter;
the notification parameter and the motion parameter;
the notification parameter and the requirement parameter; or
the power consumption parameter and the motion parameter.

In other words, the second reference signal corresponds to combined information of two or more parameters. By sending the second reference signal, the terminal device can implement combined reporting of information about two or more parameters.

The following describes combined reporting of the information about two or more parameters in the Q parameters by using examples.

In other words, the second information in the Q pieces of information in this application may indicate combined reporting of the following parameters.

In an embodiment, combined reporting of the low power indication and the high-speed motion state indicates that the terminal device is in a low power and high-speed movement state. This is applicable to a person safety monitoring scenario in a nursing home.

In another embodiment, combined reporting of the emergency call alarm and the power level (for example, a power level corresponding to a relatively low remaining power) indicates that the terminal device is in a dangerous environment and power of the terminal device is insufficient, and contact lost may be caused. This is applicable to some emergency rescue scenarios.

In another embodiment, combined reporting of the emergency call alarm and the high-speed motion state indicates that the terminal device is in a dangerous environment and moves quickly. This is applicable to a scenario in which a dangerous person is monitored or a kidnapped person makes an emergency call.

In another embodiment, combined reporting of the power level (for example, a power level corresponding to a relatively high remaining power) and the motion speed level (for example, a motion speed level corresponding to a relatively low motion speed) indicates that the terminal device is in a high power and low-speed motion state. The network side may consider that the terminal device is in a relatively "safe" state, and may not take any emergency measure.

It should be understood that, in the foregoing embodiment, only some combined reporting of information about two parameters is listed as an example, and other combination forms also fall within the protection scope of this application. It should be understood that one reference signal may also correspond to combined reporting of information about more than two parameters. For example, one reference signal corresponds to combined reporting of information about three parameters or more parameters. This may be specifically configured based on a requirement of an application scenario.

Optionally, the configuration information of the P reference signals further includes one or more of the following one or more of the Q pieces of information:
a reporting start time;
a reporting end time;
a reporting duration; and
a reporting period.

The reporting start time indicates a time at which the terminal device starts to report one or more of the Q pieces of information.

The reporting end time indicates a time at which the terminal device stops reporting one or more of the Q pieces of information.

The reporting duration indicates duration from a time at which the terminal device starts to report one or more of the Q pieces of information to a time at which the terminal device stops reporting the one or more pieces of information.

The reporting period indicates a reporting period of one or more pieces of information that are periodically reported in the Q pieces of information.

It should be understood that the information about the Q parameters may be reported in a periodic, semi-persistent, or aperiodic reporting manner, or a combination of these manners.

For example, some parameters are suitable for periodic reporting, and information about some parameters is suitable for semi-persistent or aperiodic reporting. In addition, a parameter may alternatively be reported in a combination of these manners.

For example, the power consumption parameter is suitable for periodic reporting in most cases. For example, a power level of the remaining power is reported at intervals (for example, one month). For example, the power consumption parameter may alternatively be reported in a semi-persistent manner. For example, for some terminal devices whose standby time is relatively long, the level of the remaining power may be reported at intervals (for example, every week) after a period of time (for example, three months). In some cases, the power consumption parameter is also suitable for aperiodic reporting. For example, reporting of the remaining power is triggered provided that the remaining power is less than 20%.

For another example, the notification parameter is suitable for aperiodic reporting in most cases, for example, the low power indication and the emergency call alarm.

For another example, for the motion parameter, a movement level of the gyroscope is reported in a periodic reporting manner; or in an aperiodic reporting manner, when a motion speed of the terminal device (or in other words, a movement speed of the gyroscope of the terminal device) reaches a motion level, the corresponding motion level is reported.

For a parameter that is reported periodically, an operation of detecting a reference signal by the network side is relatively simple, and the network side only needs to detect the reference signal at a corresponding reporting time based on a sending period of the reference signal, and does not need to perform blind detection (detect the reference signal at any moment).

For a parameter that is reported aperiodically, the terminal device reports information only when a specific reporting condition is met, and power consumption of the terminal device is lower.

For a parameter that is reported in a combination of periodic reporting and aperiodic reporting, a reporting manner is more flexible, and even different reporting manners may be considered for a reporting requirement of a parameter.

Optionally, the configuration information may alternatively include the reporting start time, the reporting end time, and the reporting period of the parameter. Alternatively, the configuration information includes the reporting start time, the reporting duration, and the like.

In addition, the configuration information further includes a reporting condition of one or more of the Q pieces of information. For example, the reporting condition of the one or more pieces of information includes one or more of the following:
an alarm threshold range;
a location threshold range;
a power threshold range;
a motion speed threshold range;
an energy consumption threshold range;
a working mode change;
a requirement change; and
a reporting priority sequence of the one or more pieces of information.

For example, the alarm threshold range is set for environment information of the terminal device or terminal status information (for example, power and a motion speed); the location threshold range is set for a geographical location of the terminal device; the power threshold is set for the remaining power of the terminal device; the motion speed threshold range is set for the motion speed of the terminal device; and the energy consumption threshold range is set for energy that has been consumed by the terminal device or remaining energy of the terminal device.

In addition, the working mode change indicates that a working mode of the terminal device changes. For example, when the working mode of the terminal device changes from the "normal mode" to the "power saving mode", the terminal device may indicate the change by sending a corresponding reference signal.

The requirement change indicates that a requirement of the terminal device changes. For example, when a requirement of the terminal device for positioning accuracy changes from "10 meters" to " 1 meter", the terminal device may indicate the change by sending a corresponding reference signal.

For example, environment information of the terminal device may include a geographical location of the terminal device, an ambient temperature, smoke concentration, an earthquake level, and a natural disaster level and type (for example, a cold wave, a flash flood, a typhoon, or a hailstorm).

In an embodiment, when the environment information of the terminal device meets the alarm threshold range, the terminal device reports information about a corresponding notification parameter (for example, the fire alarm or the emergency call alarm), and the network side may perform a corresponding operation or corresponding processing, for example, search for and rescue the terminal device.

In another embodiment, when the remaining power of the terminal device is less than a preset low power threshold, the terminal device reports information about the notification parameter and/or the power consumption parameter (for example, sends the low power indication and/or a power level of the remaining power), and may remind the network side to replace the battery of the terminal device.

In another embodiment, when the motion speed of the terminal device is higher than a preset high-speed motion threshold, the terminal device reports information about the motion parameter (for example, a motion level). This is applicable to a person monitoring scenario.

In another embodiment, when the motion speed of the terminal device is lower than a preset low-speed motion threshold, the terminal device reports information about the motion parameter (for example, the motion level). This is applicable to a scenario of monitoring by an Internet of Things sensor.

In addition, for example, the reporting priority sequence may be used to resolve a conflict when different reference signals are sent. For example, when sending of two reference signals conflicts, for example, the two reference signals have a same sequence, a same sending period, and a same sending pattern, and both meet a reporting condition, the terminal device may send the two reference signals based on a reporting priority sequence of the two reference signals. For example, the network side or the terminal device may pre-configure a reporting priority sequence of the Q pieces of information or some of the Q pieces of information; or preset reporting offsets (offsets relative to original reporting periods) of the Q pieces of information. Optionally, the reporting offsets of the Q pieces of information may alternatively be sent by the first device to the terminal device. Alternatively, when a conflict occurs, the terminal device may not report any information. This is not limited in this application.

Optionally, the foregoing reporting condition is applicable to periodic reporting, semi-persistent reporting, and aperiodic reporting.

Optionally, the method 200 may further include step 250.

250: The first device performs a corresponding operation or corresponding processing based on the information that is about a parameter and that corresponds to the one or more reference signals.

In the foregoing different application scenarios, the first device may perform a corresponding operation or corresponding processing based on the information that is about the parameter and that corresponds to the one or more reference signals. For details, refer to the foregoing example descriptions for different scenarios. Details are not described herein again.

It should be understood that, in some application scenarios in which the first device does not need to perform special processing or operations, step 250 is an optional operation. For example, for information that is about the high power indication and that is reported by the terminal device, after obtaining the information about the high power indication, the first device considers by default that no processing or operation needs to be performed.

The reference signal mentioned in this specification is not limited to a reference signal used for positioning, and may alternatively be a reference signal used for a non-positioning purpose. In an implementation, all the P reference signals are reference signals used for positioning. The reference signal used for positioning may be, for example, an uplink sounding reference signal (uplink sounding reference signal, UL SRS), may be a positioning reference signal (positioning reference signal, PRS), may be a sounding reference signal used in a multi-antenna system, for example, a multi-input-multi-output (multi-input-multi-output, MIMO)-SRS signal, may be a synchronization signal block (synchronization signal block, SSB) signal, or may be another reference signal that can be used for positioning. This is not limited in this application. In this implementation, when the terminal reports information, the network side receives a positioning reference signal used for positioning, and a positioning service is not interrupted. In another implementation, some of the P reference signals are reference signals used for positioning, and a reference signal used for a non-positioning purpose is further included. In this implementation, at a non-reporting moment or when the reporting condition is not met, the terminal sends a positioning reference signal for positioning. In another case, the terminal device sends a reference signal used for a non-positioning purpose. When a total quantity of positioning reference signals is limited, this implementation can increase a terminal capacity in a network.

In the information reporting method provided in this application, the terminal device sends the one or more reference signals, and the one or more reference signals correspond to the information about at least one of the power consumption parameter, the motion parameter, the notification parameter, and the requirement parameter of the terminal device. Because of the correspondence between a reference signal and the information about the at least one parameter, the terminal device can report information that is about a parameter and that corresponds to one or more reference signals by sending the one or more reference signals. This can reduce power consumption of the terminal device, and better meets a requirement of low power positioning.

In addition, complexity of the terminal device and wastes of system resources can also be reduced.

In addition, the terminal device in this application does not support reporting one or more of the Q pieces of information by using a PUSCH.

Particularly, for the terminal in an RRC_INACTIVE state, by using the technical solution in this application, the terminal device may report information without depending on a PUSCH. Compared with reporting information by using a PUSCH, reporting information corresponding to a reference signal by sending the reference signal (for example, a reference signal used for positioning) can further reduce power consumption of the terminal device. In other words, the terminal device can report communication requirement information without a need to support information reporting by using the PUSCH. Particularly, for the terminal in the RRC_INACTIVE state, the terminal can report corresponding information only by sending a reference signal used for positioning, and does not need to separately report information by using the PUSCH in addition to sending the reference signal used for positioning. Therefore, compared with a solution in which the terminal in the RRC_INACTIVE state reports information by using the PUSCH, the technical solution of this application can further reduce power consumption of the terminal in the RRC INACTIVE state.

Based on the information reporting method provided in this application, the correspondence between the P reference signals and the information that is about the at least one parameter of the terminal device is configured or preconfigured, so that the terminal device reports, by sending a reference signal, information that is about a parameter and that corresponds to the reference signal, thereby facilitating reducing power consumption of the terminal device.

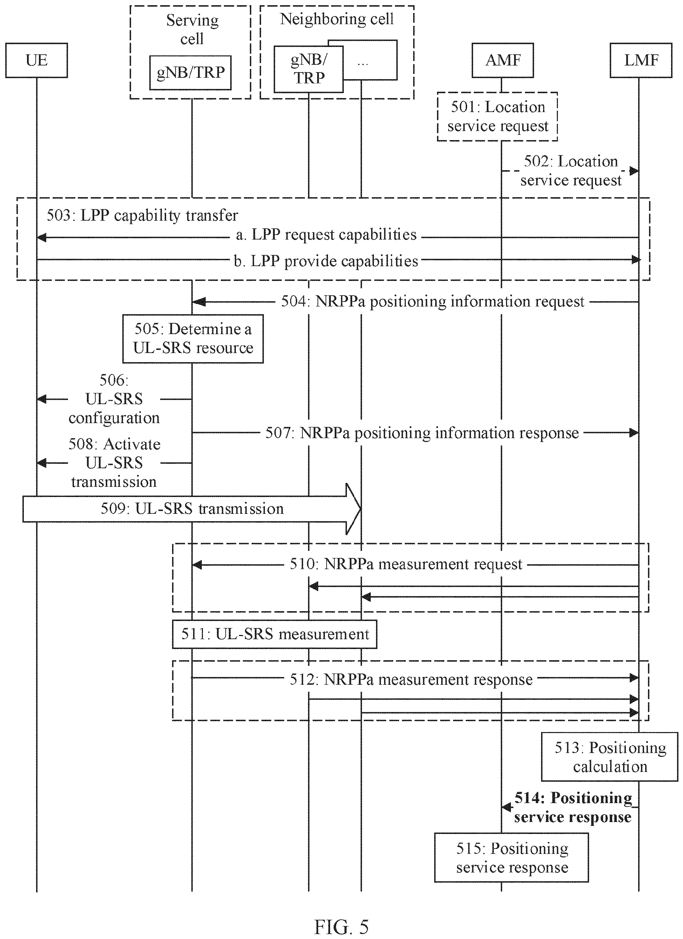

With reference to FIG. 5, the following provides an application example of the information reporting method provided in this application in a positioning scenario. In this example, a base station is used as an example of the first device.

FIG. 5 is an example of applying an information reporting method to a positioning scenario according to this application.

501: An AMF itself may start some location services on behalf of target UE, or a 5GC LCS entity, for example, a gateway mobile location center (gateway mobile location center, GMLC), sends a location service request related to the target UE to the AMF, or the UE initiates a positioning request.

502: The AMF forwards the location service request (for example, a location service request) to an LMF.

503: LPP capability transfer (LPP capability transfer).

The LPP represents the LTE positioning protocol (LTE positioning protocol), which is a signaling protocol between the LMF and the UE.

For example, the LMF requests a positioning capability from the UE by using an LPP message (for example, LPP request capabilities), and the UE provides the positioning capability by using an LPP message (for example, LPP provide capabilities), for example, sends the LPP provide capabilities.

504: The LMF requests positioning-related information, such as UL-SRS configuration information, from an NG-RAN by using an NRPPa message (for example, NRPPa positioning information request).

NRPPa represents the NR positioning protocol annex (NR positioning protocol annex), which is a signaling protocol between the LMF and a base station.

It should be understood that the LPP message in step 503 and the NRPPa message in step 504 are merely examples. In different communication systems or positioning architectures, names of location service related messages may be different. This is not limited.

505: The base station side determines a related configuration of a UL-SRS.

506: The base station sends the UL-SRS configuration information to the UE by using an RRC message.

Herein, in a possible implementation, the base station side sends the UL-SRS configuration information to the UE, where the UL-SRS configuration information includes a correspondence between W UL-SRSs and Q pieces of information, and W is a positive integer greater than or equal to 1. The configuration information of the P reference signals in the foregoing embodiment may correspond to the UL-SRS configuration information in step 506.

Optionally, in another implementation, if the correspondence between the P reference signals and the Q pieces of information is preconfigured, the UL-SRS configuration information in step 506 may include configuration information of the W UL-SRSs, but does not include the correspondence.

Optionally, in an example, W=P, that is, all the P reference signals are reference signals used for positioning. In this case, the UL-SRS configuration information in step 506 includes related configurations of the P reference signals. In this implementation, when a terminal reports information, a network side receives a positioning reference signal, which may be used for positioning, and a positioning service is not interrupted due to information reporting.

In another example, if W is less than P, the P reference signals include W reference signals used for positioning, which are specifically the W UL-SRSs, and the remaining (P-W) reference signals are reference signals used for non-positioning purposes. In this case, respective related configurations of the W reference signals used for positioning and the remaining (P-W) reference signals used for non-positioning purposes may be delivered by using a same configuration/message/signaling. For example, the network side delivers the related configurations of the P reference signals by using the UL-SRS configuration information in step 506. Alternatively, the respective related configurations of the W reference signals used for positioning and the remaining (P-W) reference signals used for non-positioning purposes may be delivered separately, or in other words, may be delivered by using different configurations/messages/signaling. For example, the related configurations of the W reference signals used for positioning are included in the UL-SRS configuration information in step 506, and the related configurations of the remaining (P-W) reference signals used for non-positioning purposes are delivered by using separate signaling configurations. This is not limited in this application.

In this implementation, at a non-reporting moment or when a reporting condition is not met, the terminal sends a positioning reference signal for positioning. In another case, the terminal device sends a reference signal used for a non-positioning purpose. When a total quantity of positioning reference signals is limited, this implementation can increase a capacity of a positioning terminal, that is, increase a quantity of terminals that meet a positioning requirement in a network.

507: The NG-RAN sends positioning-related information (for example, the UL-SRS configuration information) to the LMF by using an NRPPa message (for example, NRPPa positioning information response).

508: The serving base station activates SRS transmission.

It should be noted that the activation step 508 is required only for an aperiodic SRS and a semi-persistent SRS. For the aperiodic SRS, the base station side performs activation by using DCI. For the semi-persistent SRS, the base station performs activation by delivering a medium access control-control element (medium access control-control element, MAC CE).

509: The UE sends the UL-SRS based on the UL-SRS configuration information received from the base station side.

A positioning procedure may further include subsequent steps 510 to 515.

510: The LMF requests measurement information from the serving base station and another positioning reference base station (for example, an adjacent station) by using an NRPPa message (for example, NRPPa measurement request).

511: The serving base station and the another positioning reference base station (the adjacent station) perform UL-SRS measurement.

512: The serving base station and the another positioning reference base station (the adjacent station) return a measurement result to the LMF by using an NRPPa message (for example, NRPPa measurement response).

513: The LMF performs location calculation.

514 and 515: The LMF returns location information to the AMF, the 5GC LCS entity, or the UE separately by using a positioning service response message.

It should be understood that the positioning procedure shown in FIG. 5 is merely used as an example, to describe application of the method for reporting information by a terminal provided in this application to the positioning procedure. In addition, the method for reporting information by a terminal provided in this application is also applicable to another positioning procedure. Based on different specific application scenarios or implementations, there may be another positioning procedure. A person skilled in the art can know, based on the example in FIG. 5, how the method for reporting information by a terminal in this application is used in another positioning procedure. Details are not listed one by one in this specification.

It should be noted that, for brief description, the foregoing method embodiments are described as a series of action combinations. However, a person skilled in the art should understand that embodiments of this application are not limited to the described action sequences, because according to embodiments of this application, some steps may be performed in another sequence or performed at the same time. Second, a person skilled in the art should appreciate that all the embodiments described in this specification are example embodiments, and the related actions and modules are not necessarily required by this application.

The foregoing describes in detail the information reporting method provided in this application, and the following describes a communication apparatus provided in this application.

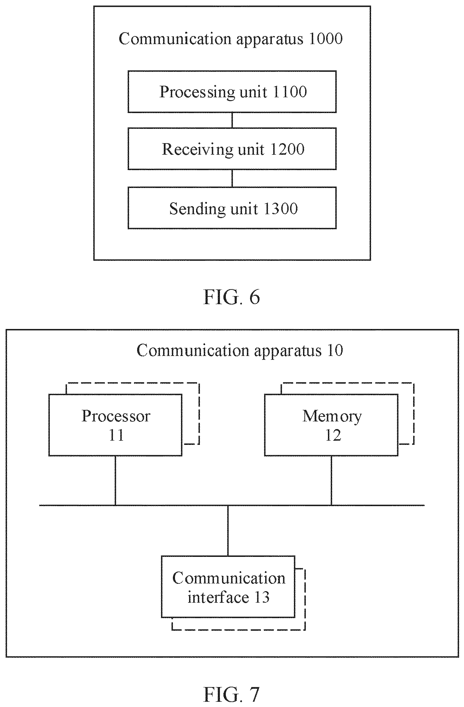

FIG. 6 is a block diagram of a communication apparatus according to this application. As shown in FIG. 6, a communication apparatus 1000 includes a processing unit 1100, a receiving unit 1200, and a sending unit 1300.

Optionally, the communication apparatus 1000 may correspond to the terminal device in embodiments of this application.

In this case, the units of the communication apparatus 1000 are configured to implement the following functions:

The processing unit 1100 is configured to determine information about at least one of a power consumption parameter, a motion parameter, a notification parameter, and a requirement parameter; and
the sending unit 1300 is configured to send one or more reference signals.

Optionally, in an embodiment, the processing unit 1100 is configured to control, based on a correspondence and the information about the at least one parameter, the sending unit 1300 to send the one or more reference signals, where the correspondence is a correspondence between P reference signals and Q pieces of information, and P and Q are positive integers; and
the one or more reference signals belong to the P reference signals, the information about the at least one parameter belongs to the Q pieces of information, and the Q pieces of information include information about at least one of the following parameters:
the power consumption parameter;
the motion parameter;
the notification parameter; and
the requirement parameter.

Optionally, in an embodiment, the communication apparatus does not support transmitting at least one of the Q pieces of information by using a physical uplink shared channel PUSCH.

Optionally, in an embodiment, the P reference signals include a first reference signal, the Q pieces of information include first information, the first reference signal corresponds to the first information, and the first information indicates information about the power consumption parameter, the motion parameter, the notification parameter, or the requirement parameter.

Optionally, in an embodiment, the P reference signals include a second reference signal, the Q pieces of information include second information, the second reference signal corresponds to the second information, and the second information indicates information about at least two of the following parameters:
the power consumption parameter;
the motion parameter;
the notification parameter; and
the requirement parameter.

Optionally, in an embodiment, the power consumption parameter includes one or more of the following: a power level, an energy consumption state, and a standby time;
the motion parameter includes one or more of the following: whether the terminal device is in a motion state, whether the terminal device is in a high-speed motion state, whether the terminal device is in a low-speed motion state, a motion speed level, a motion direction, and a motion posture;
the notification parameter includes one or more of the following: a high power indication, a low power indication, a high energy consumption indication, a low energy consumption indication, a high-speed movement indication, a low-speed movement indication, an emergency call alarm, a geo-fence alarm, and a working mode indication; and
the requirement parameter includes a quality of service QoS requirement.

Optionally, in an embodiment, that the second information indicates information about at least two of the following parameters includes:

The second information indicates the notification parameter and information about at least one of the following parameters: the power consumption parameter, the motion parameter, or the requirement parameter; or,
the second information indicates information about the power consumption parameter and the motion parameter.

Optionally, in an embodiment, any two of the P reference signals are different in at least one of the following:
a sending period, a reference signal pattern, and a reference signal sequence.

Optionally, in an embodiment, the receiving unit 1200 is configured to receive configuration information of the P reference signals, where the configuration information includes the correspondence.

Optionally, in an embodiment, the configuration information further includes a reporting condition of one or more of the Q pieces of information, and the reporting condition of the one or more pieces of information includes one or more of the following:
an alarm threshold range;
a location threshold range;
a power threshold range;
a motion speed threshold range;
an energy consumption threshold range;
a working mode change;
a requirement change; and
a reporting priority sequence of the one or more pieces of information.

Optionally, in an embodiment, at least one of the P reference signals is a reference signal used for positioning.

Optionally, the communication apparatus 1000 may correspond to the first device in embodiments of this application.

In some solutions, the units of the communication apparatus 1000 are configured to implement the following functions:

The receiving unit 1200 is configured to receive one or more reference signals from a terminal device; and
the processing unit 1100 is configured to determine information about at least one of a power consumption parameter, a motion parameter, a notification parameter, and a requirement parameter of the terminal device based on the one or more reference signals.

Optionally, in an embodiment, the processing unit 1100 is configured to:
determine the information about the at least one of the power consumption parameter, the motion parameter, the notification parameter, and the requirement parameter of the terminal device based on the one or more reference signals and a correspondence, where the correspondence is a correspondence between P reference signals and Q pieces of information, and P and Q are positive integers, where
the one or more reference signals belong to the P reference signals, the information about the at least one parameter belongs to the Q pieces of information, and the Q pieces of information include information about at least one of the following parameters:
   the power consumption parameter;
   the motion parameter;
   the notification parameter; and
   the requirement parameter.

Optionally, in an embodiment, the P reference signals include a first reference signal, the Q pieces of information include first information, the first reference signal corresponds to the first information, and the first information indicates information about the power consumption parameter, the motion parameter, the notification parameter, or the requirement parameter.

Optionally, in an embodiment, the P reference signals include a second reference signal, the Q pieces of information include second information, the second reference signal corresponds to the second information, and the second information indicates information about at least two of the following parameters:
the power consumption parameter;
the motion parameter;
the notification parameter; and
the requirement parameter.

Optionally, in an embodiment, the power consumption parameter includes one or more of the following: a power level, an energy consumption state, and a standby time;
the motion parameter includes one or more of the following: whether the terminal device is in a motion state, whether the terminal device is in a high-speed motion state, whether the terminal device is in a low-speed motion state, a motion speed level, a motion direction, and a motion posture;
the notification parameter includes one or more of the following: a high power indication, a low power indication, a high energy consumption indication, a low energy consumption indication, a high-speed movement indication, a low-speed movement indication, an emergency call alarm, a geo-fence alarm, and a working mode indication; and
the requirement parameter includes a quality of service QoS requirement.

Optionally, in an embodiment, that the second information indicates information about at least two of the following parameters includes:

The second information indicates the notification parameter and information about at least one of the following parameters: the power consumption parameter, the motion parameter, or the requirement parameter; or,
the second information indicates information about the power consumption parameter and the motion parameter.

Optionally, in an embodiment, any two of the P reference signals are different in at least one of the following:
a sending period, a reference signal pattern, and a reference signal sequence.

Optionally, in an embodiment, the sending unit 1300 is configured to send configuration information of the P reference signals to the terminal device, where the configuration information includes the correspondence.

Optionally, in an embodiment, the configuration information further includes a reporting condition of one or more of the Q pieces of information, and the reporting condition of the one or more pieces of information includes one or more of the following:
an alarm threshold range;
a location threshold range;
a power threshold range;
a motion speed threshold range;
an energy consumption threshold range;
a working mode change;
a requirement change; and
a reporting priority sequence of the one or more pieces of information.

Optionally, in an embodiment, at least one of the P reference signals is a reference signal used for positioning.

In the foregoing implementations, the receiving unit 1200 and the sending unit 1300 may alternatively be integrated into one transceiver unit, which has both a receiving function and a sending function. This is not limited herein.

In embodiments in which the communication apparatus 1000 corresponds to the terminal device, the processing unit 1100 is configured to perform processing and/or operations, other than sending and receiving actions, implemented inside the terminal device. The receiving unit 1200 is configured to perform a receiving action of the terminal device, and the sending unit 1300 is configured to perform a sending action of the terminal device.

For example, in FIG. 2, the processing unit 1100 performs step 210; the sending unit 1300 performs an action of sending one or more reference signals in step 220; and optionally, the receiving unit 1200 performs an action of receiving configuration information of P reference signals in step 230.

In embodiments in which the communication apparatus 1000 corresponds to the first device, the processing unit 1100 is configured to perform processing and/or operations, other than sending and receiving actions, implemented inside the first device. The receiving unit 1200 is configured to perform a receiving action of the first device, and the sending unit 1300 is configured to perform a sending action of the first device.

For example, in FIG. 2, the processing unit 1100 performs step 240. Optionally, the processing unit 1100 further performs step 250. Optionally, the receiving unit 1200 performs an action of receiving one or more reference signals in step 220. Optionally, the sending unit 1300 performs an action of sending configuration information of P reference signals in step 230.

FIG. 7 is a diagram of a structure of a communication apparatus according to this application. As shown in FIG. 7, a communication apparatus 10 includes one or more processors 11, one or more memories 12, and one or more communication interfaces 13. The processor 11 is configured to control the communication interface 13 to receive and send a signal. The memory 12 is configured to store a computer program. The processor 11 is configured to: invoke the computer program from the memory 12 and run the computer program, so that the communication apparatus 10 performs processing performed by the terminal device or the first device in the method embodiments of this application.

For example, the processor 11 may have a function of the processing unit 1100 shown in FIG. 6, and the communication interface 13 may have a function of the receiving unit 1200 and/or a function of the sending unit 1300 shown in FIG. 6. Specifically, the processor 11 may be configured to perform processing or operations performed inside the communication apparatus, and the communication interface 13 is configured to perform a sending and/or receiving operation of the communication apparatus.

In an implementation, the communication apparatus 10 may be the terminal device in the method embodiments. In this implementation, the communication interface 13 may be a transceiver of the terminal device. The transceiver may include a receiver and/or a transmitter. Optionally, the processor 11 may be a baseband apparatus of the terminal device, and the communication interface 13 may be a radio frequency apparatus.

In another implementation, the communication apparatus 10 may be a chip (or a chip system) installed in the terminal device. In this implementation, the communication interface 13 may be an interface circuit or an input/output interface.

In an implementation, the communication apparatus 10 may be the first device in the method embodiments. In this implementation, the communication interface 13 may be a transceiver of the first device. The transceiver may include a receiver and/or a transmitter. Optionally, the processor 11 may be a baseband apparatus of the first device, and the communication interface 13 may be a radio frequency apparatus.

In another implementation, the communication apparatus 10 may be a chip (or a chip system) installed in the first device. In this implementation, the communication interface 13 may be an interface circuit or an input/output interface.

In FIG. 7, a broken line box behind a component (for example, the processor, the memory, or the communication interface) indicates that there may be at least one component.

Optionally, the memory and the processor in the foregoing apparatus embodiments may be physically independent units, or the memory and the processor may be integrated together. This is not limited in this specification.

In addition, this application further provides a computer-readable storage medium. The computer-readable storage medium stores computer instructions. When the computer instructions are run on a computer, operations and/or processing performed by the terminal device in the method embodiments of this application are/is performed.

This application further provides a computer-readable storage medium. The computer-readable storage medium stores computer instructions. When the computer instructions are run on a computer, operations and/or processing performed by the first device in the method embodiments of this application are/is performed.

In addition, this application further provides a computer program product. The computer program product includes computer program code or instructions. When the computer program code or the instructions are run on a computer, operations and/or processing performed by the terminal device in the method embodiments of this application are/is performed.

This application further provides a computer program product. The computer program product includes computer program code or instructions. When the computer program code or the instructions are run on a computer, operations and/or processing performed by the first device in the method embodiments of this application are/is performed.

In addition, this application further provides a chip. The chip includes a processor. A memory configured to store a computer program is disposed independent of the chip. The processor is configured to execute the computer program stored in the memory, so that a terminal device in which the chip is installed performs operations and/or processing performed by the terminal device in any method embodiment.

Further, the chip may further include a communication interface. The communication interface may be an input/output interface, an interface circuit, or the like. Further, the chip may further include the memory.

This application further provides a chip. The chip includes a processor. A memory configured to store a computer program is disposed independent of the chip. The processor is configured to execute the computer program stored in the memory, so that a terminal device in which the chip is installed performs operations and/or processing performed by the first device in any method embodiment.

Further, the chip may further include a communication interface. The communication interface may be an input/output interface, an interface circuit, or the like. Further, the chip may further include the memory.

Optionally, there may be one or more processors, there may be one or more memories, and there may be one or more memories.

In addition, this application further provides a communication apparatus (for example, the communication apparatus may be a chip or a chip system), including a processor and a communication interface. The communication interface is configured to: receive (or referred to as input) data and/or information, and transmit the received data and/or information to the processor. The processor processes the data and/or information. In addition, the communication interface is further configured to output (or referred to as output) data and/or information processed by the processor, so that operations and/or processing performed by the terminal device in any one method embodiment are/is performed.

In addition, this application further provides a communication apparatus (for example, the communication apparatus may be a chip or a chip system), including a processor and a communication interface. The communication interface is configured to: receive (or referred to as input) data and/or information, and transmit the received data and/or information to the processor. The processor processes the data and/or information. In addition, the communication interface is further configured to output (or referred to as output) data and/or information processed by the processor, so that operations and/or processing performed by the first device in any one method embodiment are/is performed.

In addition, this application further provides a communication apparatus, including at least one processor. The at least one processor is coupled to at least one memory. The at least one processor is configured to execute a computer program or instructions stored in the at least one memory, to enable the communication apparatus to perform operations and/or processing performed by the terminal device in any one method embodiment.

This application further provides a communication apparatus, including at least one processor. The at least one processor is coupled to at least one memory. The at least one processor is configured to execute a computer program or instructions stored in the at least one memory, to enable the communication apparatus to perform operations and/or processing performed by the first device in any one method embodiment.

In addition, this application further provides a wireless communication system, including the terminal device and the first device in method embodiments of this application.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of network units. Some or all of the units may be selected based on actual requirements to achieve the objectives of the solutions of embodiments.

It should be understood that, "an embodiment" mentioned in the entire specification means that particular features, structures, or characteristics related to the embodiment are included in at least one embodiment of this application. Therefore, embodiments in the entire specification do not necessarily mean a same embodiment. In addition, these particular features, structures, or characteristics may be combined in one or more embodiments in any appropriate manner.

It should be understood that names of all nodes and messages in this application are merely names set for ease of description in this application, and may be different in an actual network. It should not be understood that the names of the nodes and the messages are limited in this application. On the contrary, any name that has a function that is the same as or similar to that of the node or the message used in this application is considered as a method or an equivalent replacement in this application, and falls within the protection scope of this application. Details are not described below again.

It should be understood that, ordinal numerals such as "first" and "second" in embodiments of this application are used to distinguish between a plurality of objects, and are not intended to limit sizes, content, a sequence, a time sequence, priorities, or importance degrees of the plurality of objects.

It should be further understood that, in this application, "when", "in a case that", and "if" all mean that a network element performs corresponding processing in an objective situation, but do not constitute a limitation on time, do not require that the network element has a determining action during implementation, and do not mean other limitations either.

It should be further understood that, in this application, "at least one" means one or more, and "a plurality of" means two or more. "At least one item (piece)" or a similar expression thereof means one item (piece) or a plurality of items (pieces), that is, any combination of these items, including any combination of singular items (pieces) or plural items (pieces). For example, at least one of a, b, or c represents: a, b, c, a and b, a and c, b and c, or a, b, and c.

It should be further understood that, an expression used in this application similar to an expression that "an item includes one or more of the following: A, B, and C", unless otherwise specifically stated, usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, a total of three elements: A, B, and C are used as an example to describe optional entries of the item. When an expression is "the item includes at least one of the following: A, B, ..., and X", in other words, more elements are included in the expression, entries to which the item is applicable may also be obtained according to the foregoing rule.

It should be further understood that the term "and/or" in this specification describes only an association relationship between associated objects and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B.

It should be further understood that, in embodiments of this application, "A corresponds to B" means that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information reporting method, comprising:
determining, by a terminal device, information about at least one of a power consumption parameter, a motion parameter, a notification parameter, and a requirement parameter; and
sending, by the terminal device, one or more reference signals based on the information about the at least one parameter.

2. The method according to claim 1, wherein the sending, by the terminal device, one or more reference signals based on the information about the at least one parameter comprises:
sending, by the terminal device, the one or more reference signals based on a correspondence and the information about the at least one parameter, wherein the correspondence is a correspondence between P reference signals and Q pieces of information, and P and Q are positive integers, wherein
the one or more reference signals belong to the P reference signals, the information about the at least one parameter belongs to the Q pieces of information, and the Q pieces of information comprise information about at least one of the following parameters:
the power consumption parameter;
the motion parameter;
the notification parameter; and
the requirement parameter.

3. The method according to claim 2, wherein the terminal device does not support transmitting at least one of the Q pieces of information by using a physical uplink shared channel PUSCH.

4. The method according to claim 2 or 3, wherein the P reference signals comprise a first reference signal, the Q pieces of information comprise first information, the first reference signal corresponds to the first information, and the first information indicates information about the power consumption parameter, the motion parameter, the notification parameter, or the requirement parameter.

5. The method according to any one of claims 2 to 4, wherein the P reference signals comprise a second reference signal, the Q pieces of information comprise second information, the second reference signal corresponds to the second information, and the second information indicates information about at least two of the following parameters:
the power consumption parameter;
the motion parameter;
the notification parameter; and
the requirement parameter.

6. The method according to any one of claims 1 to 5, wherein the power consumption parameter comprises one or more of the following: a power level, an energy consumption state, and a standby time;
the motion parameter comprises one or more of the following: whether the terminal device is in a motion state, whether the terminal device is in a high-speed motion state, whether the terminal device is in a low-speed motion state, a motion speed level, a motion direction, and a motion posture;
the notification parameter comprises one or more of the following: a high power indication, a low power indication, a high energy consumption indication, a low energy consumption indication, a high-speed movement indication, a low-speed movement indication, an emergency call alarm, a geo-fence alarm, and a working mode indication; and
the requirement parameter comprises a quality of service QoS requirement.

7. The method according to claim 5 or 6, wherein that the second information indicates information about at least two of the following parameters comprises:
the second information indicates the notification parameter and information about at least one of the following parameters: the power consumption parameter, the motion parameter, or the requirement parameter; or,
the second information indicates information about the power consumption parameter and the motion parameter.

8. The method according to any one of claims 2 to 7, wherein any two of the P reference signals are different in at least one of the following:
a sending period, a reference signal pattern, and a reference signal sequence.

9. The method according to any one of claims 2 to 8, wherein the method further comprises:
receiving, by the terminal device, configuration information of the P reference signals, wherein the configuration information comprises the correspondence.

10. The method according to claim 9, wherein the configuration information further comprises a reporting condition of one or more of the Q pieces of information, and the reporting condition of the one or more pieces of information comprises one or more of the following:
an alarm threshold range;
a location threshold range;
a power threshold range;
a motion speed threshold range;
an energy consumption threshold range;
a working mode change;
a requirement change; and
a reporting priority sequence of the one or more pieces of information.

11. The method according to any one of claims 2 to 10, wherein at least one of the P reference signals is a reference signal used for positioning.

12. An information reporting method, comprising:
receiving, by a first device, one or more reference signals from a terminal device; and
determining, by the first device, information about at least one of a power consumption parameter, a motion parameter, a notification parameter, and a requirement parameter of the terminal device based on the one or more reference signals.

13. The method according to claim 12, wherein the determining, by the first device, information about at least one of a power consumption parameter, a motion parameter, a notification parameter, and a requirement parameter of the terminal device based on the one or more reference signals comprises:
determining, by the first device, the information about the at least one of the power consumption parameter, the motion parameter, the notification parameter, and the requirement parameter of the terminal device based on the one or more reference signals and a correspondence, wherein the correspondence is a correspondence between P reference signals and Q pieces of information, and P and Q are positive integers, wherein
the one or more reference signals belong to the P reference signals, the information about the at least one parameter belongs to the Q pieces of information, and the Q pieces of information comprise information about at least one of the following parameters:
the power consumption parameter;
the motion parameter;
the notification parameter; and
the requirement parameter.

14. The method according to claim 12 or 13, wherein the P reference signals comprise a first reference signal, the Q pieces of information comprise first information, the first reference signal corresponds to the first information, and the first information indicates information about the power consumption parameter, the motion parameter, the notification parameter, or the requirement parameter.

15. The method according to any one of claims 12 to 14, wherein the P reference signals comprise a second reference signal, the Q pieces of information comprise second information, the second reference signal corresponds to the second information, and the second information indicates information about at least two of the following parameters:
the power consumption parameter;
the motion parameter;
the notification parameter; and
the requirement parameter.

16. The method according to any one of claims 12 to 15, wherein the power consumption parameter comprises one or more of the following: a power level, an energy consumption state, and a standby time;
the motion parameter comprises one or more of the following: whether the terminal device is in a motion state, whether the terminal device is in a high-speed motion state, whether the terminal device is in a low-speed motion state, a motion speed level, a motion direction, and a motion posture;
the notification parameter comprises one or more of the following: a high power indication, a low power indication, a high energy consumption indication, a low energy consumption indication, a high-speed movement indication, a low-speed movement indication, an emergency call alarm, a geo-fence alarm, and a working mode indication; and
the requirement parameter comprises a quality of service QoS requirement.

17. The method according to claim 15 or 16, wherein that the second information indicates information about at least two of the following parameters comprises:
the first information indicates the notification parameter and information about at least one of the following parameters: the power consumption parameter, the motion parameter, or the requirement parameter; or,
the first information indicates information about the power consumption parameter and the motion parameter.

18. The method according to any one of claims 13 to 17, wherein any two of the P reference signals are different in at least one of the following:
a sending period, a reference signal pattern, and a reference signal sequence.

19. The method according to any one of claims 13 to 18, wherein the method further comprises:
sending, by the first device, configuration information of the P reference signals to the terminal device, wherein the configuration information comprises the correspondence.

20. The method according to claim 19, wherein the configuration information further comprises a reporting condition of one or more of the Q pieces of information, and the reporting condition of the one or more pieces of information comprises one or more of the following:
an alarm threshold range;
a location threshold range;
a power threshold range;
a motion speed threshold range;
an energy consumption threshold range;
a working mode change;
a requirement change; and
a reporting priority sequence of the one or more pieces of information.

21. The method according to any one of claims 12 to 19, wherein at least one of the P reference signals is a reference signal used for positioning.

22. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 11 or the method according to any one of claims 12 to 21.

23. A chip, comprising a processor and a communication interface, wherein the communication interface is configured to: receive data and/or information, and transmit the received data and/or information to the processor, and the processor processes the data and/or information, to perform the method according to any one of claims 1 to 11, or the method according to any one of claims 12 to 21.

24. A computer-readable storage medium, wherein the computer-readable storage medium stores computer instructions, and when the computer instructions are run on a computer, the method according to any one of claims 1 to 11 or the method according to any one of claims 12 to 21 is implemented.

25. A computer program product, wherein the computer program product comprises computer program code, and when the computer program code is run on a computer, the method according to any one of claims 1 to 11 or the method according to any one of claims 12 to 21 is implemented.
